# EUROPEAN PATENT APPLICATION

(11) **EP 4 826 711 A1**
(43) Date of publication of application: **21.10.2026**
(21) Application number: 24904277.1
(22) Date of filing: 13.12.2024
(51) Int. Cl.: G10H 1/00, G06Q 50/10, G10H 1/40, G06V 40/20, G06V 10/77, G06V 10/82, G10L 13/08, G10L 25/51

(54) **METHOD, DEVICE, AND SYSTEM FOR REMIXING, EDITING, AND GENERATING MUSIC ON BASIS OF ARTIFICIAL INTELLIGENCE**

(30) Priority: 13.12.2023 KR 20230180783; 21.10.2024 KR 20240144443; 04.11.2024 KR 20240154725; 15.11.2024 KR 20240163488; 12.12.2024 KR 20240185277
(71) Applicant: Neutune Co., Ltd., Seoul 06132 (KR)
(72) Inventor: KIM, Tae Hyoung, Seoul 06116 (KR); KIM, Keunhyoung, Daejeon 34077 (KR); LEE, Jongpil, Seoul 05236 (KR); KUM, Sangeun, Seoul 07048 (KR); KIM, Taejun, Seoul 03322 (KR)
(74) Representative: Ter Meer und Partner mbB
(86) International application number: PCT/KR2024/020314
(87) International publication number: WO 2025/127712

(57) **Abstract**

The present invention relates to a method comprising: receiving at least one of text information, tag information, image information, and music information input from a user terminal; extracting one or more embeddings based on the received information through one or more embedding extraction models; calculating similarity between the one or more embeddings based on the received information and one or more embeddings extracted from component blocks included in a database - the component blocks being extracted from raw music files - through a similarity calculation model; selecting a first reference component block from the database based on the calculated similarity; filtering the database based on the selected first reference component block; selecting one or more component blocks from the filtered database; and generating a reference section based on the first reference component and the selected one or more component blocks.

## Description

### TECHNICAL FIELD

The present invention relates to music and audio processing technology using artificial intelligence, and more particularly, to a method, apparatus and system for remixing, editing and generating music using the structure and instrument elements of music based on artificial intelligence technology.

### BACKGROUND ART

The present invention relates to music and audio processing technology using deep learning, and more particularly, to a system and method capable of remixing, editing and generating music according to user's intention by using the structure and instrument elements of music using deep learning technology.

The following documents form the background or part of the present invention, and the contents disclosed in these documents are referred to in describing the present invention.
1. Kim et al., All-In-One Metrical And Functional Structure Analysis With Neighborhood Attentions on Demixed Audio. IEEE, WASPAA, 2023
2. Lee et al., "Metric learning vs classification for disentangled music representation learning", ISMIR, 2020
3. Doh, SeungHeon, et al. "LP-MusicCaps: LLM-Based Pseudo Music Captioning. ISMIR, 2023
4. Doh, SeungHeon, et al. "ENRICHING MUSIC DESCRIPTIONS WITH A FINETUNED-LLM AND METADATA FOR TEXT-TO-MUSIC RETRIEVAL". ICASSP, 2024

Conventional music editing and remixing technologies are mainly performed through simple track-level processing, and have limitations in that they cannot reflect the complex structure or instrument elements of music in detail. In addition, existing technologies have difficulty in precisely extracting musical features or providing natural results when remixing.

Furthermore, in conventional Music Information Retrieval technology, the focus has been on individual tasks such as beat/downbeat tracking, segment segmentation, and functional structure labeling. As a result, the potential benefits that can be obtained from interaction between structures have often been missed. In addition, learning all hierarchical information in an integrated manner has been a burden of processing the length of songs and high-dimensional data, and conventional deep learning models have had limitations in processing such data.

The automatic multi-channel music mix from audio stems (or component music files) disclosed in [Patent Document 0001] automatically mixes audio stems (or component music files) based on preset rules, but the function of reflecting user's intention or preferences in detail is limited.

[Patent Document 0002] focuses on generating music by having a machine learning model learn the music generation method of a rule-based expert system. However, although the method of reflecting user's feedback or preferences is utilized in model learning, the function of directly reflecting user's intention in the generation process itself is relatively limited.

### [Prior Art Documents]

[Patent Document 0001] Korean Patent Registration No. 10-2268933 (published on June 25, 2021) - 'Automatic Multi-Channel Music Mix from Multiple Audio Stems'
[Patent Document 0002] International Publication No. WO 2024/178038 A1 (published on February 21, 2024) - 'Machine Learning Model Trained Based on Music and Decisions Generated by Expert System'

### DISCLOSURE OF INVENTION

### TECHNICAL PROBLEM

The present invention has been devised to solve the above-mentioned problems, and more particularly, to provide a method, apparatus and system for remixing, editing and generating music using the structure and instrument elements of music based on artificial intelligence technology.

According to the present invention, a method, apparatus and system for generating embeddings based on at least one of text information, image information, music information and video information, and remixing, editing and generating music based thereon can be provided.

The present invention is to provide advanced music analysis and generation technology based on deep learning. The present invention aims to extract various features such as genre, mood, tempo, and instrument configuration of music using deep learning, and through this, subdivide the structure and instrument elements of music, and naturally edit, remix, and generate music as intended by the user. The present invention can automate music elements that had to be manually analyzed in the past and provide advanced analysis by utilizing deep learning.

The present invention is to provide segmentation and component blocking technology of various music elements. The present invention is to provide technology for separating music into time axis (e.g., intro section, verse section, chorus section, etc.) and instrument axis (e.g., vocal, bass, drum, etc.) to block components. Through this structural analysis, users can easily edit and reconstruct various parts of music. This reflects natural changes in music and enables more flexible and precise remixing.

The present invention is to provide remixing and generation technology based on user intention. The present invention provides deep learning-based music captioning and embedding technology that can remix and generate music according to user's input prompts or intentions. According to the present invention, more flexible and customized music editing and generation are possible by analyzing and reflecting music elements that meet user's needs.

The present invention is to provide technology that can reflect user feedback in real time when generating music. The present invention enables a deep learning-based model to generate music by reflecting user's feedback in real time. User's preferences and feedback are analyzed as embeddings, and through this, music optimized for the user can be provided by reflecting them in the music generation and editing process.

The present invention is to provide music feature analysis technology through multi-dimensional embedding and contrastive learning. The present invention can generate multi-dimensional embeddings of music content using deep learning and analyze feature differences between music through contrastive learning. Through this, various aspects of music can be analyzed more precisely, and based on this, the quality of music generation and editing can be improved.

The present invention provides technology for generating embeddings between music and text using deep learning. Through this, users can describe the characteristics of music in natural language, and search and remix music suitable for it. The music text embedding model enables effective reflection of music styles or features desired by users, providing a more intuitive remixing and generation process.

The present invention can achieve musical harmony through frequency distribution and chord progression embedding. The present invention analyzes and reflects detailed tone ranges and progressions of music through frequency distribution and chord progression embedding. Through this, musical harmony can be maintained by adjusting so that the frequency distributions of various component music files do not overlap when remixing, and music with similar chord progressions can be effectively searched. The present invention analyzes and reflects detailed tone ranges and progressions of music through frequency band embedding and chord progression embedding. Through this, when remixing, various component music files' frequency distributions can be adjusted so that they do not overlap, and music with similar chord progressions can be found. This can improve the completeness of remixing.

### TECHNICAL SOLUTION

A method for generating music based on artificial intelligence according to an embodiment of the present invention comprises the steps of: receiving at least one of text information, image information, music information and video information; extracting embeddings based on the received information; calculating similarity between the extracted input embeddings and embeddings of component blocks included in a database; selecting a reference component block from the database based on the similarity; filtering the database based on the selected reference component block; selecting one or more component blocks from the filtered database; generating a reference section based on the reference component and the selected one or more component blocks; and generating one or more audio sections based on the generated reference section, and arranging the reference section and the one or more audio sections chronologically.

In the method for generating music based on artificial intelligence according to an embodiment of the present invention, the step of extracting embeddings based on the received information may include at least one of: generating text embeddings based on at least one of caption information generated for at least one of the image information and the music information and the text information; generating music feature embeddings from the music information; generating chord progression embeddings from the music information; and generating frequency band embeddings from the music information.

An apparatus for generating music based on artificial intelligence according to an embodiment of the present invention comprises: means for receiving at least one of text information, image information, music information and video information; means for extracting embeddings based on the received information; means for calculating similarity between the extracted input embeddings and embeddings of component blocks included in a database; means for selecting a reference component block from the database based on the similarity; means for filtering the database based on the selected reference component block; means for selecting one or more component blocks from the filtered database; means for generating a reference section based on the reference component and the selected one or more component blocks; and means for generating one or more audio sections based on the generated reference section, and arranging the reference section and the one or more audio sections chronologically.

In the apparatus for generating music based on artificial intelligence according to an embodiment of the present invention, the means for extracting embeddings based on the received information may perform at least one of: an operation of generating text embeddings based on at least one of caption information generated for at least one of the image information and the music information and the text information; an operation of generating music feature embeddings from the music information; an operation of generating chord progression embeddings from the music information; and an operation of generating frequency band embeddings from the music information.

The present invention relates to a method for providing music generated based on artificial intelligence, comprising the steps of: receiving at least one of text information, tag information, image information and music information inputted from a user terminal; extracting one or more embeddings based on the received information through one or more embedding extraction models; calculating similarity between the one or more embeddings based on the received information and one or more embeddings extracted from component blocks included in a database - the component blocks being extracted from raw music files - through a similarity calculation model; selecting a first reference component block from the database based on the calculated similarity; filtering the database based on the selected first reference component block; selecting one or more component blocks from the filtered database; and generating a reference section based on the first reference component and the selected one or more component blocks.

Further comprising: selecting a second reference component block having the same instrument element as the first reference component block from the raw music file; selecting one or more additional component blocks from the filtered database based on the second reference component block; generating an audio section based on the second reference component block and the one or more additional component blocks; and generating a music file by chronologically arranging the reference section and the audio section.

Further, the one or more embeddings extracted based on the received information and the one or more embeddings extracted from the component blocks included in the database each include at least one of text embeddings, music text embeddings, music feature embeddings, chord progression embeddings, and frequency band embeddings.

Further, the step of calculating similarity between the one or more embeddings extracted based on the received information and the one or more embeddings extracted from component blocks included in the database through a similarity calculation model comprises: calculating one or more similarity scores based on the text embeddings, the music text embeddings, the music feature embeddings, the chord progression embeddings, and the frequency band embeddings; and reflecting weights according to the type of embeddings for the one or more similarity scores, and calculating the similarity by summing the one or more similarity scores reflecting the weights.

Further, the step of filtering the database based on the selected first reference component block further comprises: filtering the database based on music basic information related to the first reference component block.

The present invention relates to a server for providing music generated based on artificial intelligence, comprising: a communication module; a memory storing a database; and a processor, wherein the processor receives at least one of text information, tag information, image information and music information inputted from a user terminal through the communication module, extracts one or more embeddings based on the received information through one or more embedding extraction models stored in the memory, calculates similarity between the one or more embeddings based on the received information and one or more embeddings extracted from component blocks included in the database - the component blocks being extracted from raw music files - through a similarity calculation model stored in the memory, selects a first reference component block from the database based on the calculated similarity, filters the database based on the selected first reference component block, selects one or more component blocks from the filtered database, and generates a reference section based on the first reference component and the selected one or more component blocks.

Further, the processor selects a second reference component block having the same instrument element as the first reference component block from the raw music file, selects one or more additional component blocks from the filtered database based on the second reference component block, generates an audio section based on the second reference component block and the one or more additional component blocks, and generates a music file by chronologically arranging the reference section and the audio section.

Further, the one or more embeddings extracted based on the received information and the one or more embeddings extracted from the component blocks included in the database each include at least one of text embeddings, music text embeddings, music feature embeddings, chord progression embeddings, and frequency band embeddings.

Further, the processor calculates one or more similarity scores based on the text embeddings, the music text embeddings, the music feature embeddings, the chord progression embeddings, and the frequency band embeddings through the similarity calculation model stored in the memory, reflects weights according to the type of embeddings for the one or more similarity scores, and calculates the similarity by summing the one or more similarity scores reflecting the weights.

Further, the processor filters the database based on music basic information related to the first reference component block.

The present invention relates to a method for providing music generated based on artificial intelligence, comprising the steps of: receiving text information, tag information, image information and music information inputted from a user terminal; generating image caption information for the image information through an image captioning model; generating music caption information for the music information through a music captioning model; performing preprocessing on the text information, the tag information, the image caption information, and the music caption information through a text preprocessing model; and generating at least one of text embeddings and music text embeddings based on the preprocessed information through one or more embedding extraction models.

Further, the music captioning model is an artificial intelligence model obtained by transfer learning an artificial intelligence model pre-trained with a pseudo caption dataset generated based on an artificial intelligence model utilizing a system prompt including one or more tags and one or more instructions, based on a label dataset.

Further, the one or more instructions include at least one of: an instruction for designating the purpose or role of the music captioning model; and an instruction for indicating the output format of the pseudo caption.

Further comprising: calculating similarity between at least one of the text embeddings and the music text embeddings based on the preprocessed information and at least one of the text embeddings and the music text embeddings extracted from component blocks included in the database through a similarity calculation model.

Further, the step of calculating similarity comprises: calculating one or more similarity scores between at least one of the text embeddings and the music text embeddings based on the preprocessed information and at least one of the text embeddings and the music text embeddings extracted from component blocks included in the database, reflecting weights according to the type of embeddings for the one or more similarity scores, and calculating the similarity by summing the one or more similarity scores reflecting the weights.

The present invention relates to a server for providing music generated based on artificial intelligence, comprising: a communication module; a memory storing a database; and a processor, wherein the processor receives text information, tag information, image information and music information inputted from a user terminal through the communication module, generates image caption information for the image information through an image captioning model stored in the memory, generates music captioning information for the music information through a music captioning model stored in the memory, performs preprocessing on the text information, the tag information, the image caption information, and the music caption information through a text preprocessing model stored in the memory, and generates at least one of text embeddings and music text embeddings based on the preprocessed information through one or more embedding extraction models stored in the memory.

Further, the music captioning model is an artificial intelligence model obtained by transfer learning an artificial intelligence model pre-trained with a pseudo caption dataset generated based on an artificial intelligence model utilizing a system prompt including one or more tags and one or more instructions, based on a label dataset.

Further, the music captioning model is a natural language processing-based artificial intelligence model obtained by transfer learning a natural language processing-based artificial intelligence model pre-trained with a pseudo caption dataset generated based on a natural language processing-based artificial intelligence model utilizing a system prompt including one or more tags and one or more instructions, based on a label dataset.

Further, the one or more instructions include at least one of: an instruction for designating the purpose or role of the music captioning model; and an instruction for indicating the output format of the pseudo caption.

Further, the processor calculates similarity between at least one of the text embeddings and the music text embeddings based on the preprocessed information and at least one of the text embeddings and the music text embeddings extracted from component blocks included in the database through a similarity calculation model stored in the memory.

### ADVANTAGEOUS EFFECTS

The present invention has been devised from the problems of the prior art described above, and the present invention aims to extract various features such as genre, mood, tempo, and instrument configuration of music using deep learning, and through this, subdivide the structure and instrument elements of music, and naturally edit, remix, and generate music as intended by the user. The present invention can automate music elements that had to be manually analyzed in the past and provide advanced analysis by utilizing deep learning.

According to the present invention, technology for separating music into time axis (e.g., intro section, verse section, chorus section, etc.) and instrument axis (e.g., vocal, bass, drum, etc.) to block components can be provided. Through this structural analysis, users can easily edit and reconstruct various parts of music. This reflects natural changes in music and enables more flexible and precise remixing.

According to the present invention, deep learning-based music captioning and embedding technology that can remix and generate music according to user's input prompts or intentions can be provided. According to the present invention, more flexible and customized music editing and generation are possible by analyzing and reflecting music elements that meet user's needs.

According to the present invention, a deep learning-based model can generate music by reflecting user's feedback in real time. User's preferences and feedback are analyzed as embeddings, and through this, music optimized for the user can be provided by reflecting them in the music generation and editing process.

According to the present invention, multi-dimensional embeddings of music content can be generated using deep learning and feature differences between music can be analyzed through contrastive learning. Through this, various aspects of music can be analyzed more precisely, and based on this, the quality of music generation and editing can be improved.

According to the present invention, by providing technology for generating embeddings between music and text using deep learning, users can describe the characteristics of music in natural language, and search and remix music suitable for it. The music text embedding model enables effective reflection of music styles or features desired by users, providing a more intuitive remixing and generation process.

According to the present invention, detailed tone ranges and progressions of music can be analyzed and reflected through frequency distribution and chord progression embedding. Through this, musical harmony can be maintained by adjusting so that the frequency distributions of various component music files do not overlap when remixing, and music with similar chord progressions can be effectively searched. The present invention analyzes and reflects detailed tone ranges and progressions of music through frequency band embedding and chord progression embedding. Through this, when remixing, various component music files' frequency distributions can be adjusted so that they do not overlap, and music with similar chord progressions can be found. This can improve the completeness of remixing.

According to the present invention, a method, apparatus and system for remixing, editing and generating music based on multi-modal based on at least one of text, image, video and music information can be provided.

The effects according to the present invention are not limited thereto, and those having ordinary knowledge in the technical field to which the present invention belongs will be able to recognize the effects of the present invention devised to solve the problems of the prior art described above based on the configurations and purposes described in the specification of the present invention.

### BRIEF DESCRIPTION OF DRAWINGS

FIGS. 1a and 1b are conceptual diagrams illustrating a system environment for providing a service according to an embodiment of the present invention.
FIG. 2a is a diagram for explaining the configuration of a user terminal (100a) and a local terminal (100b) according to an embodiment of the present invention.
FIG. 2b is a diagram for explaining the configuration of a cloud server (200a) and a local server (200b) according to an embodiment of the present invention.
FIG. 3a is a flowchart showing an artificial intelligence model for providing a service according to an embodiment of the present invention and an overall method for providing a service according to an embodiment of the present invention.
FIG. 3b is a diagram for explaining an artificial intelligence model for obtaining information and/or files according to an embodiment of the present invention.
FIG. 4a is a table organizing one or more files for providing a service according to an embodiment of the present invention.
FIG. 4b is a table organizing one or more pieces of information for providing a service according to an embodiment of the present invention.
FIG. 4c is a table organizing one or more embeddings for providing a service according to an embodiment of the present invention.
FIG. 5a is a conceptual diagram illustrating a process of obtaining component music files from raw music files according to an embodiment of the present invention.
FIG. 5b is a conceptual diagram illustrating a database of component music files according to an embodiment of the present invention.
FIG. 6 is a conceptual diagram for explaining the configuration of a hierarchical structure analysis model according to an embodiment of the present invention.
FIG. 7 is a conceptual diagram for explaining the configuration of a transformer-based artificial intelligence model included in the hierarchical structure analysis model according to an embodiment of the present invention.
FIG. 8 is a conceptual diagram for explaining a neighborhood attention model included in the hierarchical structure analysis model according to an embodiment of the present invention.
FIG. 9 is a diagram for explaining a process of generating a pseudo caption according to an embodiment of the present invention.
FIG. 10 is a diagram for explaining an example of instructions input to generate a caption according to an embodiment of the present invention.
FIG. 11 is a diagram for explaining an example of instructions input to generate a caption according to an embodiment of the present invention.
FIG. 12 is a conceptual diagram for explaining the configuration of a cross-modal encoder-decoder transformer according to an embodiment of the present invention.
FIG. 13 is a diagram for explaining a process of obtaining a music captioning model (302) according to an embodiment of the present invention.
FIG. 14 is a diagram for explaining a music text embedding extraction model according to an embodiment of the present invention.
FIG. 15a is a diagram for explaining a triplet-based music feature embedding extraction model according to an embodiment of the present invention.
FIG. 15b is a diagram for explaining a proxy-based music feature embedding extraction model according to an embodiment of the present invention.
FIG. 15c is a diagram for explaining a classification-based music feature embedding extraction model according to an embodiment of the present invention.
FIGS. 16a and 16b are diagrams for explaining a chord progression embedding extraction model according to an embodiment of the present invention.
FIGS. 17a and 17b are diagrams for explaining a frequency band embedding extraction model according to an embodiment of the present invention.
FIG. 18 is a diagram for explaining a similarity judgment method based on a music feature embedding space according to an embodiment of the present invention.
FIG. 19a is a flowchart for explaining a component block filtering process according to an embodiment of the present invention.
FIG. 19b is a flowchart for explaining a component block search process according to an embodiment of the present invention.
FIG. 20 is a flowchart for explaining a section expansion process according to an embodiment of the present invention.
FIG. 21 is a flowchart for explaining a component block editing and mixing process according to an embodiment of the present invention.
FIGS. 22a and 22b are flowcharts for explaining a method of generating music based on multi-modal according to an embodiment of the present invention.

### DETAILED DESCRIPTION OF EMBODIMENTS

Hereinafter, embodiments according to the present invention will be described with reference to the accompanying drawings. In adding reference numerals to components in each drawing, it should be noted that the same components are given the same numerals as much as possible even if they are displayed on different drawings. In addition, in describing the embodiments of the present invention, if it is determined that a detailed description of a related known configuration or function interferes with the understanding of the embodiments of the present invention, the detailed description thereof will be omitted. In addition, although embodiments of the present invention will be described below, the technical spirit of the present invention is not limited or restricted thereto, and can be variously implemented by those skilled in the art.

The advantages and features of the present invention, and methods of achieving them will become clear with reference to the embodiments described in detail below together with the accompanying drawings. However, the present invention is not limited to the embodiments disclosed below, but can be implemented in various different forms, and only these embodiments are provided to make the disclosure of the present invention complete, and to fully inform those of ordinary skill in the art to which the present invention belongs of the scope of the present invention, and the present invention is only defined by the scope of the claims.

The terminology used in this specification is for the purpose of describing embodiments and is not intended to limit the present invention. In this specification, the singular form also includes the plural form unless specifically stated in the phrase. "Comprises" and/or "comprising" used in the specification does not exclude the presence or addition of one or more other components in addition to the mentioned components. The same reference numerals refer to the same components throughout the specification, and "and/or" includes each of the mentioned components and all combinations of one or more. Although "first", "second", etc. are used to describe various components, it goes without saying that these components are not limited by these terms. These terms are only used to distinguish one component from another component. Therefore, it goes without saying that the first component mentioned below may be the second component within the technical spirit of the present invention.

Unless otherwise defined, all terms (including technical and scientific terms) used in this specification can be used with meanings that can be commonly understood by those of ordinary skill in the art to which the present invention belongs. In addition, terms defined in commonly used dictionaries are not interpreted ideally or excessively unless clearly specifically defined.

The term "unit" or "module" used in the specification means a hardware component such as software, FPGA or ASIC, and "unit" or "module" performs certain roles. However, "unit" or "module" is not meant to be limited to software or hardware. "Unit" or "module" may be configured to be in an addressable storage medium or may be configured to reproduce one or more processors. Therefore, as an example, "unit" or "module" includes components such as software components, object-oriented software components, class components and task components, and processes, functions, attributes, procedures, subroutines, segments of program code, drivers, firmware, microcode, circuits, data, databases, data structures, tables, arrays and variables. The functionality provided within components and "units" or "modules" can be combined into a smaller number of components and "units" or "modules" or further separated into additional components and "units" or "modules".

In this specification, a computer means all kinds of hardware devices including at least one processor, and depending on the embodiment, it can be understood as a meaning that encompasses software configurations operating on the corresponding hardware device. For example, a computer can be understood as a meaning that includes all of smartphones, tablet PCs, desktops, notebooks, user clients and applications running on each device, and is not limited thereto.

Those skilled in the art should recognize that the various illustrative logical blocks, configurations, modules, circuits, means, logics, and algorithm steps described in connection with the embodiments disclosed herein can be implemented as electronic hardware, computer software, or combinations of both. To clearly illustrate this interchangeability of hardware and software, various illustrative components, blocks, configurations, means, logics, modules, circuits, and steps have been described above generally in terms of their functionality. Whether such functionality is implemented as hardware or software depends on the particular application and design constraints imposed on the overall system. Skilled artisans may implement the described functionality in varying ways for each particular application. However, such implementation decisions should not be interpreted as causing a departure from the scope of the present disclosure.

### Overall System Environment

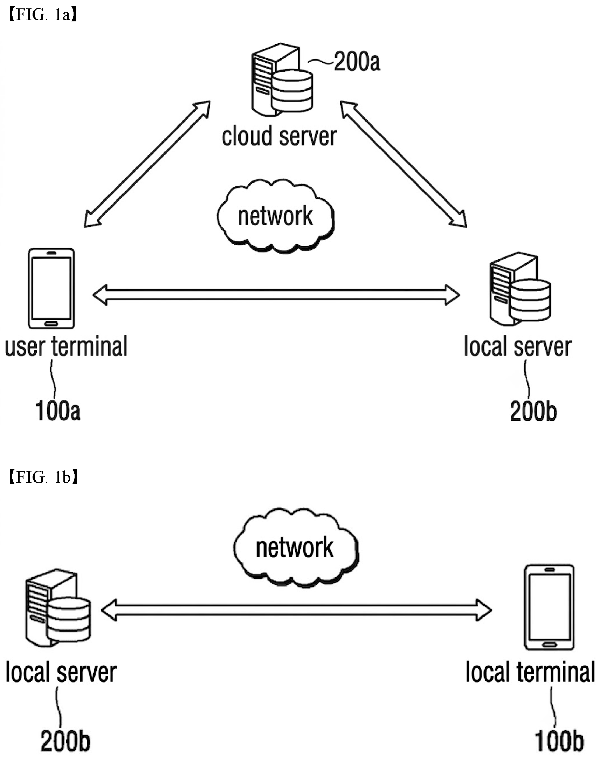

FIGS. 1a and 1b are conceptual diagrams illustrating a system environment for providing a service according to an embodiment of the present invention.

Referring to FIG. 1a, a system environment for providing a service according to an embodiment of the present invention may include a user terminal (100a), a cloud server (200a) and a local server (200b). Referring to FIG. 1b, a system environment for providing a service according to an embodiment of the present invention may further include a local terminal (100b) connected to the local server (200b) through one or more networks according to an embodiment of the present invention.

An artificial intelligence model for providing a music remixing, editing and/or generation service according to an embodiment of the present invention may be implemented in the cloud server (200a) and/or the local server (200b). According to an embodiment of the present invention, the artificial intelligence model may be distributed and implemented in the cloud server (200a) or the local server (200b). The artificial intelligence model according to an embodiment of the present invention may include one or more artificial neural networks.

An application program may be stored in the user terminal (100a) and/or the local terminal (100b) according to an embodiment of the present invention. Based on user input (e.g., prompt input, etc.) input to the user terminal (100b) and/or the local terminal (100b), a music remixing, editing and/or generation service according to an embodiment of the present invention can be provided by utilizing one or more artificial intelligence models on the cloud server (200a) and/or the local server (200b).

### User Terminal (100a) and Local Terminal (100b)

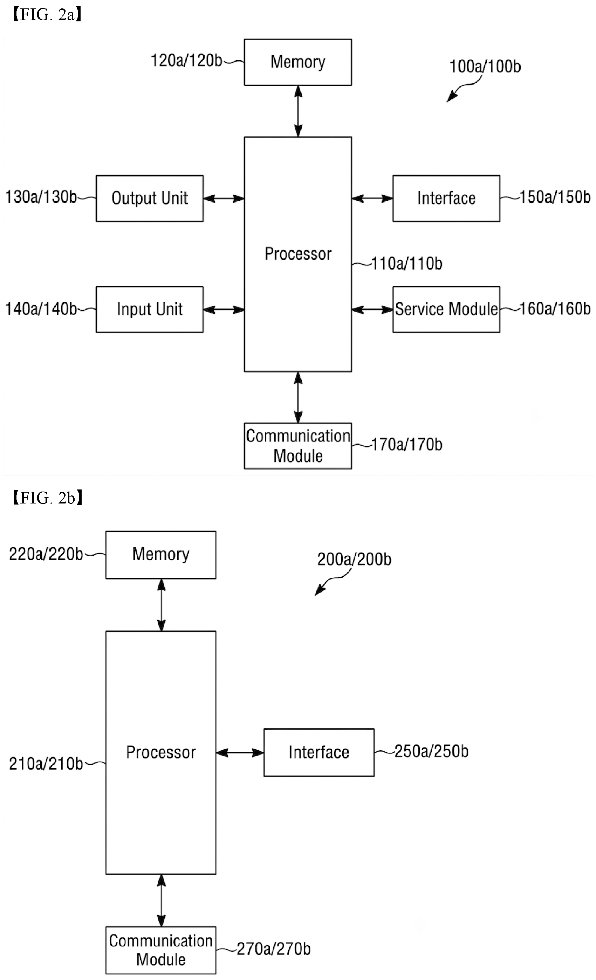

FIG. 2a is a diagram for explaining the configuration of a user terminal (100a) and a local terminal (100b) according to an embodiment of the present invention. Referring to FIG. 2a, the user terminal (100a) may include at least one of one or more processors (110a), memory (120a), output unit (130a), input unit (140a), interface (150a), service module (160a) and communication module (170a). Referring to FIG. 2a, the local terminal (100b) may include at least one of one or more processors (110b), memory (120b), output unit (130b), input unit (140b), interface (150b), service module (160b) and communication module (170b). The configuration of the user terminal (100a) and the local terminal (100b) of the present invention is not limited to the components shown in FIG. 2a. That is, depending on the implementation aspects of the embodiments of the user terminal (100a) and/or the local terminal (100b) according to the present invention, additional components may be included or some of the components shown in FIG. 2a may be omitted.

According to an embodiment of the present invention, the user terminal (100a) and/or the local terminal (100b) may be a terminal through which a music remixing, editing and/or generation service according to the present invention can be provided through information exchange with the cloud server (200a) and/or the local server (200b), and may mean a terminal possessed by a user. The user terminal (100a) and/or the local terminal (100b) according to an embodiment of the present invention may mean any form of entity(ies) in a system having a mechanism for communication with other electronic devices disclosed in the present invention. For example, such user terminal (100a) and/or local terminal (100b) may include a personal computer (PC), a notebook, a mobile terminal, a smart phone, a tablet PC, an artificial intelligence (AI) speaker and an artificial intelligence TV and a wearable device, and may include all types of terminals that can access wired/wireless networks. In addition, the user terminal (100a) and/or the local terminal (100b) may include any server implemented by at least one of an agent, an Application Programming Interface (API) and a plug-in. In addition, the user terminal (100a) and/or the local terminal (100b) may include an application source and/or a client application.

According to an embodiment of the present invention, an application program can be installed in the user terminal (100a) and/or the local terminal (100b). Various prompts can be input through the application program installed in the user terminal (100a) and/or the local terminal (100b), and various related information including music can be generated using the artificial intelligence model on the cloud server (200a) and/or the local server (200b) from the various prompts input.

### Processor (110a, 110b)

The processor (110a, 110b) according to an embodiment of the present invention may include one or more application processors (AP), one or more communication processors (CP) or at least one or more AI processors (artificial intelligence processor). The application processor, communication processor or AI processor may be included in different integrated circuit (IC) packages respectively or may be included in one IC package.

The application processor can control a plurality of hardware or software components connected to the application processor by driving an operating system or application program, and can perform various data processing/operations including multimedia data. For example, the application processor may be implemented as a system on chip (SoC). The processor (110a, 110b) may further include a graphic processing unit (GPU, not shown).

The communication processor can manage a data link and convert a communication protocol in communication between the user terminal (100a) and/or the local terminal (100b) and other computing devices (e.g., cloud server (200a), local server (200b), etc.) connected by a network. For example, the communication processor may be implemented as a SoC. The communication processor may perform at least part of multimedia control functions. In addition, the communication processor can control data transmission and reception of the communication module (170a, 170b). The communication processor may be implemented to be included as at least part of the application processor.

The application processor or communication processor may load commands or data received from at least one of non-volatile memory or other components connected to each into volatile memory and process them. In addition, the application processor or communication processor may store data received from or generated by at least one of other components in non-volatile memory. The application processor can control service providing operations through the service module (160a, 160b) through communication with other computing devices connected by a network in conjunction with the communication processor. The application processor may be implemented to be included as at least part of the communication processor.

A computer program may include one or more instructions that cause the processor (110a, 110b) to perform methods/operations according to various embodiments of the present invention when loaded into the memory (120a, 120b). That is, the processor (110a, 110b) may perform methods/operations according to various embodiments of the present invention by executing one or more instructions. In one embodiment, the computer program may include one or more instructions for performing music remixing, editing and/or generation operations according to an embodiment of the present invention.

According to an embodiment of the present invention, the processor (110a, 110b) may be composed of one or more cores, and may include processors for data analysis and deep learning, such as a central processing unit (CPU), a general purpose graphics processing unit (GPGPU), and a tensor processing unit (TPU).

The processor (110a, 110b) may read a computer program stored in the memory (120a, 120b) and perform data processing for machine learning according to an embodiment of the present invention. According to an embodiment of the present invention, the processor (110a, 110b) may perform operations for learning neural networks. The processor (110a, 110b) may perform calculations for learning neural networks, such as processing input data for learning in deep learning (DL), extracting features from input data, calculating errors, and updating weights of neural networks using backpropagation.

Further, at least one of the CPU, GPGPU, and TPU of the processor (110a, 110b) may process learning of neural networks. For example, the CPU and GPGPU together can process learning of neural networks and data classification using neural networks. Further, in one embodiment of the present invention, learning of neural networks and data classification using neural networks can be processed by using processors of a plurality of computing devices together. Further, a computer program executed in a computing device according to an embodiment of the present invention may be a CPU, GPGPU or TPU executable program.

In this specification, a model may include a neural network. In this specification, a neural network can be used interchangeably with an artificial neural network and a neural network. In this specification, a neural network may include one or more neural networks, and in this case, the output of a model and/or a neural network may be an ensemble of outputs of one or more neural networks.

According to an embodiment of the present invention, the processor (110a, 110b) can typically process the overall operation of the user terminal (100a) and/or the local terminal (100b). The processor (110a, 110b) can provide or process appropriate information or functions to the user terminal by processing signals, data, information, etc. input or output through the components examined above or by driving an application program stored in the memory (120a, 120b).

### Memory (120a, 120b)

According to an embodiment of the present invention, the memory (120a, 120b) may include built-in memory or external memory. The built-in memory may include at least one of volatile memory (e.g., dynamic RAM (DRAM), static RAM (SRAM), synchronous dynamic RAM (SDRAM), etc.) or non-volatile memory (e.g., one time programmable ROM (OTPROM), programmable ROM (PROM), erasable and programmable ROM (EPROM), electrically erasable and programmable ROM (EEPROM), mask ROM, flash ROM, NAND flash memory, NOR flash memory, etc.). According to an embodiment, the built-in memory may also take the form of a solid state drive (SSD). The external memory may further include a flash drive, for example, compact flash (CF), secure digital (SD), micro secure digital (Micro-SD), mini secure digital (Mini-SD), extreme digital (xD) or a memory stick.

According to an embodiment of the present invention, the memory (120a, 120b) may store a computer program for performing a music remixing, editing and/or generation method according to an embodiment of the present invention, and the stored computer program may be read and driven by the processor (110a, 110b). In addition, the memory (120a, 120b) may store any form of information generated or determined by the processor (110a, 110b) and any form of information received through the communication module (170a, 170b). In addition, the memory (120a, 120b) may store data related to user prompts. In addition, the memory (120a, 120b) may store data related to remixed, edited and/or generated music. For example, the memory (120a, 120b) may temporarily or permanently store input/output data.

According to an embodiment of the present invention, the memory (120a, 120b) may include at least one type of storage medium among a flash memory type, a hard disk type, a multimedia card micro type, a card type memory (e.g., SD or XD memory, etc.), Random Access Memory (RAM), Static Random Access Memory (SRAM), Read-Only Memory (ROM), Electrically Erasable Programmable Read-Only Memory (EEPROM), Programmable Read-Only Memory (PROM), magnetic memory, magnetic disk, and optical disk. The user terminal (100a) and/or the local terminal (100b) may operate in connection with web storage that performs the storage function of the memory (120a, 120b) on the Internet. The above description of memory is merely an example, and the present invention is not limited thereto.

### Output Unit (130a, 130b)

The output unit (130a, 130b) according to an embodiment of the present invention is for generating output related to vision, hearing or touch, and may include at least one of a display unit, a sound output unit, a haptic module, and a light output unit.

The display unit according to an embodiment of the present invention can implement a touch screen by forming a mutual layer structure with a touch sensor or being formed integrally. Such a touch screen can function as a user input unit that provides an input interface between the user terminal (100a) and/or the local terminal (100b) and the user, and at the same time, can provide an output interface between the user terminal (100a) and/or the local terminal (100b) and the user.

The sound output unit according to an embodiment of the present invention includes a device such as a speaker, and can output an audio signal through it. According to an embodiment of the present invention, remixed, edited and/or generated music can be output through the sound output unit.

### Input Unit (140a, 140b)

The input unit (140a, 140b) according to an embodiment of the present invention may include at least one of a camera or video input unit for video signal input, a microphone or audio input unit for audio signal input, and a user input unit (e.g., input interface, etc.) for receiving information from a user. Voice data or image data collected from the input unit (140a, 140b) can be analyzed and processed as user's control command. A user can input one or more user prompts (e.g., context information through text, image information, video information, music information, etc.) related to the service of the present invention through the user input unit according to an embodiment of the present invention.

### Interface (150a, 150b)

The interface (150a, 150b) according to an embodiment of the present invention serves as a passage to various types of external devices connected to the user terminal (100a) and/or the local terminal (100b). Such interface (150a, 150b) may include at least one of a wired/wireless headset port, an external charger port, a wired/wireless data port, a memory card port, a port for connecting a device equipped with an identification module, an audio Input/Output (I/O) port, a video I/O port, and an earphone port. The user terminal (100a) and/or the local terminal (100b) can perform appropriate control related to the connected external device in response to the external device (e.g., cloud server (200a) and/or local server (200b)) being connected to the interface (150a, 150b).

In addition, the interface (150a, 150b) according to an embodiment of the present invention can perform data transfer operations between at least one of the processor (110a, 110b), the memory (120a, 120b), the output unit (130a, 130b), the input unit (140a, 140b), the service module (160a, 160b) and the communication module (170a, 170b). The interface (150a, 150b) according to an embodiment of the present invention can transmit commands or data input from the user through the input unit (140a, 140b) or the output unit (130a, 130b) to the processor (110a, 110b), the memory (120a, 120b), the communication module (170a, 170b), etc. through a bus (not shown). For example, the interface (150a, 150b) can provide data on the user's touch input input through a touch panel to the processor (110a, 110b). For example, the interface (150a, 150b) can output commands or data received from the processor (110a, 110b), the memory (120a, 120b), the communication module (170a, 170b), etc. through a bus through the output unit (130a, 130b). For example, the interface (150a, 150b) can output voice data processed through the processor (110a, 110b) to the user through a speaker. Meanwhile, the interface (150a, 150b) according to an embodiment of the present invention can be driven based on user input through the input unit (140a, 140b).

### Service Module (160a, 160b)

The service module (160a, 160b) according to an embodiment of the present invention can provide various application program services based on the output results of the artificial intelligence model of the present invention. Specifically, the service module (160a, 160b) can provide a music remixing, editing and/or generation service based on the output results of the artificial intelligence model of the present invention. The service module (160a, 160b) can be driven in conjunction with the processor (110a, 110b) and the interface (150a, 150b) to provide appropriate services to users based on user input through the input unit (140a, 140b).

According to an embodiment of the present invention, the service module (160a, 160b) may be implemented in the form of an application program on a server. The application program implemented on such a server may be provided externally in the form of an application programming interface (API). In addition, the service module (160a, 160b) may be implemented in the form of an application program on the user terminal (100a) and/or the local terminal (100b). The user may be provided with the service of the application program through a user interface output through the output unit (130a, 130b) of the user terminal (100a) and/or the local terminal (100b).

The service according to an embodiment of the present invention may include various services, such as an artist search service for input music, a search service for other music composed, performed, or sung by the input artist, a vocal tag-based music search service or artist search service, a service for searching for various music based on the input of a user prompt, as well as a service for remixing, editing and/or generating music based on the input of a user prompt.

### Communication Module (170a, 170b)

According to an embodiment of the present invention, the communication module (170a, 170b) may include a wireless communication module or an RF module. The wireless communication module may include, for example, Wi-Fi, BT, GPS, or NFC.

According to an embodiment of the present invention, the communication module (170a, 170b) may provide a wireless communication function using radio frequency. Additionally or alternatively, the wireless communication module may include a network interface or a modem for connecting the user terminal (100a) and/or the local terminal (100b) to a network (e.g., the Internet, LAN, WAN, telecommunication network, cellular network, satellite network, POTS, or 5G network).

According to an embodiment of the present invention, the RF module may be responsible for the transmission and reception of data, for example, the transmission and reception of an RF signal or a called electronic signal. For example, the RF module may include a transceiver, a power amp module (PAM), a frequency filter, or a low noise amplifier (LNA). In addition, the RF module may further include components for transmitting and receiving electromagnetic waves in free space in wireless communication, for example, a conductor or a conducting wire.

The communication module (170a, 170b) according to an embodiment of the present invention may use various wired communication systems such as a Public Switched Telephone Network (PSTN), an x Digital Subscriber Line (xDSL), a Rate Adaptive DSL (RADSL), a Multi Rate DSL (MDSL), a Very High Speed DSL (VDSL), a Universal Asymmetric DSL (UADSL), a High Bit Rate DSL (HDSL), and a Local Area Network (LAN).

In addition, the communication module (170a, 170b) presented in this specification may use various wireless communication systems that can be realized now and in the future, such as mobile communication systems such as 4G and 5G (LTE), and satellite communication systems such as Starlink.

According to an embodiment of the present invention, the communication module (170a, 170b) may be configured regardless of its communication mode, such as wired and wireless, and may be configured as various communication networks such as a Personal Area Network (PAN) and a Wide Area Network (WAN). In addition, the network may be the well-known World Wide Web (WWW), and may use a wireless transmission technology used for short-range communication, such as Infrared Data Association (IrDA) or Bluetooth. The technologies described in this specification may be used not only in the networks mentioned above but also in other networks.

### Cloud Server (200a) and Local Server (200b)

FIG. 2b is a diagram for explaining the configuration of a cloud server (200a) and a local server (200b) according to an embodiment of the present invention. Referring to FIG. 2b, the cloud server (200a) may include at least one of one or more processors (210a), a memory (220a), an interface (250a), and a communication module (270a). Referring to FIG. 2b, the local server (200b) may include at least one of one or more processors (210b), a memory (220b), an interface (250b), and a communication module (270b). The configuration of the cloud server (200a) and/or the local server (200b) of the present invention is not limited to the components shown in FIG. 2b. That is, depending on the implementation aspects of the embodiments of the cloud server (200a) and/or the local server (200b) according to the present invention, additional components may be included or some of the components shown in FIG. 2b may be omitted.

According to an embodiment of the present invention, the cloud server (200a) and/or the local server (200b) may be a digital device, such as a laptop computer, a notebook computer, a desktop computer, a web pad, or a mobile phone, which is a digital device equipped with a processor and provided with a memory to have computing capability. The cloud server (200a) may be a web server that processes services. The types of servers described above are merely examples, and the present invention is not limited thereto.

According to an embodiment of the present invention, the cloud server (200a) may be a server that provides a cloud computing service. More specifically, the cloud server (200a) may be a server that provides a cloud computing service, which is a type of internet-based computing that processes information on another computer connected to the internet rather than on the user's own computer. The cloud computing service may be a service that stores data on the internet and allows a user to use necessary data or programs anytime and anywhere through an internet connection without installing them on the user's own computer, and data stored on the internet can be easily shared and delivered through simple manipulation and clicks. In addition, the cloud computing service may be a service that not only simply stores data on a server on the internet but also allows a user to perform a desired task using the functions of application programs provided on the web without separately installing a program, and allows multiple people to work while sharing a document at the same time. In addition, the cloud computing service may be implemented in at least one form of IaaS (Infrastructure as a Service), PaaS (Platform as a Service), SaaS (Software as a Service), a virtual machine-based cloud server, and a container-based cloud server. That is, the cloud server (200a) according to an embodiment of the present invention may be implemented in at least one form of the cloud computing services described above. The specific description of the cloud computing service described above is merely an example, and may include any platform for constructing the cloud computing environment of the present invention.

Meanwhile, according to embodiments of the present invention, the cloud server (200a) and/or the local server (200b) may be configured as a single server or may be configured as a plurality of servers.

According to an embodiment of the present invention, the cloud server (200a) and/or the local server (200b) may be a server that stores one or more training data sets for training a neural network. The one or more training data sets may include at least one of various pieces of information and files, such as raw music files, component music files, stem files, music caption information, music basic information, tag information, and embeddings according to embodiments of the present invention. The information stored in the cloud server (200a) and/or the local server (200b) may be utilized as training data, validation data, and test data for training the neural network in the present invention.

At least one of the cloud server (200a) and/or the local server (200b) described above may mutually transmit and receive data with at least one of the user terminal (100a) and/or the local terminal (100b) through the communication module (270a, 270b). Alternatively, data may be mutually transmitted and received with at least one of the user terminal (100a) and/or the local terminal (100b) based on a data transmission/reception tool based on an API or the like. Accordingly, the service according to embodiments of the present invention may be provided through the user terminal (100a) and/or the local terminal (100b).

### Processor (210a, 210b)

According to an embodiment of the present invention, the processor (210a, 210b) generally controls the cloud server (200a) and/or the local server (200b). According to an embodiment of the present invention, the processor (210a, 210b) may be a general-purpose processor (e.g., a CPU), but may also be an AI-dedicated processor (e.g., a GPU, a TPU) for training and/or executing an artificial intelligence model.

According to an embodiment of the present invention, the processor (210a, 210b) may include an AI processor. According to an embodiment of the present invention, the AI processor may train a neural network using a program stored in the memory (220a, 220b). The AI processor according to an embodiment of the present invention may train while adjusting the parameters of an artificial intelligence model for processing data related to the music remixing, editing and/or generation operations according to the present invention. Alternatively, the AI processor according to an embodiment of the present invention may perform an operation of improving the output by feeding back the output result of the artificial intelligence model according to the present invention.

According to an embodiment of the present invention, the AI processor may include a data training unit (not shown) that trains a neural network for data classification/recognition. The data training unit may learn criteria regarding which training data to use to determine data classification/recognition and how to classify and recognize data using the training data. The data training unit may train a deep learning model by acquiring training data to be used for training and applying the acquired training data to the deep learning model.

According to an embodiment of the present invention, the data training unit (not shown) may be manufactured in the form of at least one hardware chip and mounted on the cloud server (200a) and/or the local server (200b). For example, the data training unit may be manufactured in the form of a dedicated hardware chip for artificial intelligence, or may be manufactured as a part of a general-purpose processor (CPU) or a graphics-dedicated processor (GPU) and mounted on the cloud server (200a) and/or the local server (200b). In addition, the data training unit may be implemented as a software module. When implemented as a software module (or a program module including instructions), the software module may be stored in a non-transitory computer readable media. In this case, the at least one software module may be provided by an operating system (OS) or provided by an application.

According to an embodiment of the present invention, the data training unit (not shown) may use the acquired training data to train the neural network model to have determination criteria regarding how to classify/recognize certain data. In this case, the training method by the model training unit may be classified into supervised learning, unsupervised learning, and reinforcement learning. Here, supervised learning refers to a method of training an artificial neural network in a state where a label for the training data is given, and the label may mean a correct answer (or a result value) that the artificial neural network should infer when the training data is input to the artificial neural network.

According to an embodiment of the present invention, unsupervised learning may mean a method of training an artificial neural network in a state where a label for the training data is not given. Reinforcement learning may mean a method of training an agent defined within a specific environment to select an action or a sequence of actions that maximizes the cumulative reward in each state. In addition, the model training unit may train the artificial intelligence model using a learning algorithm including backpropagation or gradient descent. When the artificial neural network is trained, the trained artificial neural network may be called an artificial intelligence model. The artificial intelligence model may be stored in the memory (220a, 220b) as described later and used to infer a result for new input data that is not training data.

According to an embodiment of the present invention, the AI processor may further include a data preprocessing unit (not shown) and/or a data selection unit (not shown) in order to improve the analysis result using the artificial intelligence model or to save resources or time required for generating the artificial intelligence model.

According to an embodiment of the present invention, the data preprocessing unit (not shown) may preprocess the acquired data so that the acquired data can be used for training/inference for situation determination. For example, the data preprocessing unit may extract feature information as preprocessing for the input data received through the communication module (270a, 270b), and the feature information may be extracted in a format such as a feature vector, a feature point, or a feature map.

According to an embodiment of the present invention, the data selection unit (not shown) may select data necessary for training from among the training data or the training data preprocessed by the preprocessing unit. The selected training data may be provided to the model training unit. For example, when the data acquired through the input unit (140a, 140b) of the user terminal (100a) and/or the local terminal (100b) is received through the communication module (270a, 270b), the data selection unit may select only data on an object included in a specific region as training data by detecting the specific region among the received data. In addition, the data selection unit may select data necessary for inference from among the input data acquired through the input unit (140a, 140b) and received through the communication module (270a, 270b) or the input data preprocessed by the preprocessing unit.

In addition, according to an embodiment of the present invention, the AI processor may further include a model evaluation unit (not shown) in order to improve the analysis result of the neural network model. The model evaluation unit (not shown) may input evaluation data to the neural network model, and when the analysis result output from the evaluation data does not satisfy a predetermined criterion, may cause the model training unit to train again. In this case, the evaluation data may be predetermined data for evaluating the artificial intelligence model. For example, among the analysis results of the trained neural network model for the evaluation data, the model evaluation unit may evaluate that the predetermined criterion is not satisfied when the number or ratio of evaluation data whose analysis result is not accurate exceeds a preset threshold. According to an embodiment of the present invention, the model evaluation unit may also improve the inference capability of the model through feedback.

### Memory (220a, 220b)

The memory (220a, 220b) according to an embodiment of the present invention may store various files and information necessary for providing the service of the present invention. The memory (220a, 220b) is accessed by the processor (210a, 210b), and reading/writing/modifying/deleting/updating of data by the processor (210a, 210b) may be performed. In addition, the memory (220a, 220b) may store a neural network model (e.g., a deep learning model) generated through a learning algorithm for data classification/recognition. Furthermore, the memory (220a, 220b) may store not only the artificial intelligence model but also input data, training data, training history, and the like.

According to an embodiment of the present invention, the memory (220a, 220b) may include an internal memory or an external memory. The internal memory may include at least one of a volatile memory (e.g., dynamic RAM (DRAM), static RAM (SRAM), synchronous dynamic RAM (SDRAM), etc.) or a non-volatile memory (e.g., one time programmable ROM (OTPROM), programmable ROM (PROM), erasable and programmable ROM (EPROM), electrically erasable and programmable ROM (EEPROM), mask ROM, flash ROM, NAND flash memory, NOR flash memory, etc.). According to an embodiment, the internal memory may take the form of a solid state drive (SSD). The external memory may further include a flash drive, for example, compact flash (CF), secure digital (SD), micro secure digital (Micro-SD), mini secure digital (Mini-SD), extreme digital (xD), or a memory stick.

According to an embodiment of the present invention, the memory (220a, 220b) may store a computer program for performing the music remixing, editing and/or generation method according to an embodiment of the present invention, and the stored computer program may be read and driven by the processor (210a, 210b). In addition, the memory (220a, 220b) may store any form of information generated or determined by the processor (210a, 210b) and any form of information received through the communication module (270a, 270b). In addition, the memory (220a, 220b) may store data on user prompts. In addition, the memory (220a, 220b) may store data on remixed, edited and/or generated music. For example, the memory (220a, 220b) may temporarily or permanently store input/output data.

According to an embodiment of the present invention, the memory (220a, 220b) may include at least one type of storage medium among a flash memory type, a hard disk type, a multimedia card micro type, a card type memory (e.g., SD or XD memory), random access memory (RAM), static random access memory (SRAM), read-only memory (ROM), electrically erasable programmable read-only memory (EEPROM), programmable read-only memory (PROM), a magnetic memory, a magnetic disk, and an optical disk. The cloud server (200a) and/or the local server (200b) may operate in relation to a web storage that performs the storage function of the memory (220a, 220b) on the internet. The description of the memory described above is merely an example, and the present invention is not limited thereto.

### Interface (250a, 250b)

The interface (250a, 250b) according to an embodiment of the present invention serves as a passage with various types of external devices connected to the cloud server (200a) and/or the local server (200b). Such an interface (250a, 250b) may include at least one of a wired/wireless headset port, an external charger port, a wired/wireless data port, a memory card port, a port for connecting a device provided with an identification module, an audio I/O (Input/Output) port, a video I/O (Input/Output) port, and an earphone port. The cloud server (200a) and/or the local server (200b) may perform appropriate control related to the connected external device in response to an external device (e.g., the user terminal (100a) and/or the local terminal (100b)) being connected to the interface (250a, 250b).

In addition, the interface (250a, 250b) according to an embodiment of the present invention may perform a data transfer operation performed between at least one of the processor (210a, 210b), the memory (220a, 220b), and the communication module (270a, 270b). For example, the interface (250a, 250b) may provide data on the user's input received through the communication module (270a, 270b) to the processor (210a, 210b). For example, the interface (250a, 250b) may transmit a command or data received from the processor (210a, 210b) and the memory (220a, 220b) through a bus to another electronic device through the communication module (270a, 270b).

### Communication Module (270a, 270b)

According to an embodiment of the present invention, the communication module (270a, 270b) may include a wireless communication module or an RF module. The wireless communication module may include, for example, Wi-Fi, BT, GPS, or NFC.

According to an embodiment of the present invention, the communication module (270a, 270b) may provide a wireless communication function using radio frequency. Additionally or alternatively, the wireless communication module may include a network interface or a modem for connecting the cloud server (200a) and/or the local server (200b) to a network (e.g., the Internet, LAN, WAN, telecommunication network, cellular network, satellite network, POTS, or 5G network).

According to an embodiment of the present invention, the RF module may be responsible for the transmission and reception of data, for example, the transmission and reception of an RF signal or a called electronic signal. For example, the RF module may include a transceiver, a power amp module (PAM), a frequency filter, or a low noise amplifier (LNA). In addition, the RF module may further include components for transmitting and receiving electromagnetic waves in free space in wireless communication, for example, a conductor or a conducting wire.

The communication module (270a, 270b) according to an embodiment of the present invention may use various wired communication systems such as a Public Switched Telephone Network (PSTN), an x Digital Subscriber Line (xDSL), a Rate Adaptive DSL (RADSL), a Multi Rate DSL (MDSL), a Very High Speed DSL (VDSL), a Universal Asymmetric DSL (UADSL), a High Bit Rate DSL (HDSL), and a Local Area Network (LAN).

In addition, the communication module (270a, 270b) presented in this specification may use various wireless communication systems that can be realized now and in the future, such as mobile communication systems such as 4G and 5G (LTE), and satellite communication systems such as Starlink.

According to an embodiment of the present invention, the communication module (270a, 270b) may be configured regardless of its communication mode, such as wired and wireless, and may be configured as various communication networks such as a Personal Area Network (PAN) and a Wide Area Network (WAN). In addition, the network may be the well-known World Wide Web (WWW), and may use a wireless transmission technology used for short-range communication, such as Infrared Data Association (IrDA) or Bluetooth. The technologies described in this specification may be used not only in the networks mentioned above but also in other networks.

### Network

The network according to embodiments of the present invention may use various wired communication systems such as a Public Switched Telephone Network (PSTN), an x Digital Subscriber Line (xDSL), a Rate Adaptive DSL (RADSL), a Multi Rate DSL (MDSL), a Very High Speed DSL (VDSL), a Universal Asymmetric DSL (UADSL), a High Bit Rate DSL (HDSL), and a Local Area Network (LAN). In addition, the network presented herein may use various wireless communication systems such as Code Division Multi Access (CDMA), Time Division Multi Access (TDMA), Frequency Division Multi Access (FDMA), Orthogonal Frequency Division Multi Access (OFDMA), Single Carrier-FDMA (SC-FDMA), and other systems.

The network according to embodiments of the present invention may be configured regardless of its communication mode, such as wired and wireless, and may be configured as various communication networks such as a Personal Area Network (PAN) and a Wide Area Network (WAN). In addition, the network may be the well-known World Wide Web (WWW), and may use a wireless transmission technology used for short-range communication, such as Infrared Data Association (IrDA) or Bluetooth. The technologies described in this specification may be used not only in the networks mentioned above but also in other networks.

### Artificial Intelligence Model Based on Natural Language Processing

According to an embodiment of the present invention, an artificial intelligence (AI) model based on natural language processing (NLP) may be used in the process for providing the music remixing, editing and/or generation service. The artificial intelligence model based on natural language processing may be designed to understand, interpret, generate, and manipulate human language. Such a model may utilize various computing technologies to analyze and process text or voice information, thereby enabling a machine to perform tasks such as language translation, sentiment analysis, text summarization, and conversational agents such as chatbots. The first working step of the artificial intelligence model based on natural language processing according to an embodiment of the present invention may be to divide text into smaller units such as words, subwords, or characters (e.g., tokens). For example, in sentences such as "the cat is sleeping" or "it is raining in the forest," each word may be tokenized and processed. According to an embodiment of the present invention, once the text is tokenized, it must be represented in a numerical format that the artificial intelligence model can understand, and in order to represent the text in a numerical format, techniques such as word embedding and contextual embedding, such as One-Hot Encoding, Word2Vec, GloVe, or FastText, may be used.

The artificial intelligence model based on natural language processing according to an embodiment of the present invention may include a statistical language model using a statistical method based on the probability of a word sequence, and a neural language model using deep learning technology. The neural language model according to an embodiment of the present invention may include an artificial intelligence model based on RNN, LSTM, Transformer, and the like. The Transformer architecture according to an embodiment of the present invention may include an encoder for processing an input sequence to convert it into a hidden representation, a decoder for taking the hidden representation and generating an output such as translation or summarization, and attention layers for enabling the encoder and decoder models to focus on relevant parts of the input text.

According to an embodiment of the present invention, a powerful language model such as a large language model (LLM) may be used. A large language model may refer to an artificial intelligence model based on natural language processing having billions or more of parameters. Large language models show strong performance in few-shot and zero-shot performance. Large language models may be mainly trained with text data from various domains such as Wikipedia, GitHub, chat logs, medical articles, legal articles, books, and crawled web pages. When successfully trained, such models demonstrate the ability to understand words in various domains. According to an embodiment of the present invention, a music remixing, editing and/or generation service may be provided based on data understanding utilizing the artificial intelligence model based on natural language processing.

### Overall Service Overview

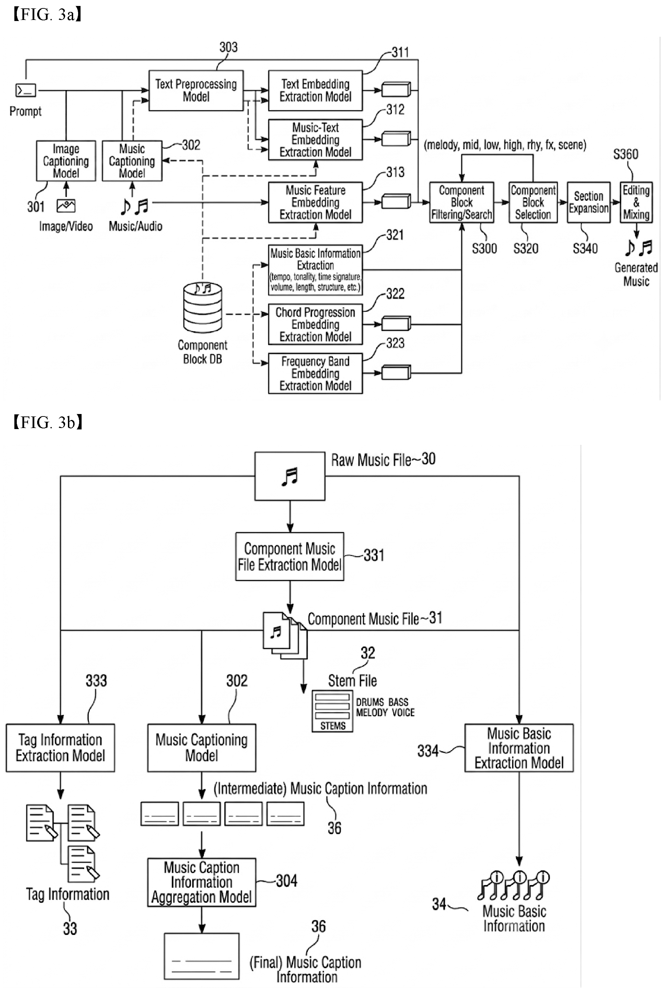

FIG. 3a is a flowchart showing an artificial intelligence model for providing a service according to an embodiment of the present invention and an overall method for providing a service according to an embodiment of the present invention. At least one of the models and information shown in FIG. 3a may be stored in at least one of the user terminal (100a), the local terminal (100b), the cloud server (200a), and the local server (200b).

At least one of the steps of the method shown in FIG. 3a may be performed in at least one of the user terminal (100a), the local terminal (100b), the cloud server (200a), and the local server (200b). That is, it should be understood that all steps of the overall method shown in FIG. 3a may be performed in one of the user terminal (100a), the local terminal (100b), the cloud server (200a), and the local server (200b), but some steps of the overall method shown in FIG. 3a may be performed in one of the user terminal (100a), the local terminal (100b), the cloud server (200a), and the local server (200b), and at least some of the remaining steps may be divided and performed in the remaining devices among the user terminal (100a), the local terminal (100b), the cloud server (200a), and the local server (200b).

Referring to FIG. 3a, the process indicated by the solid line corresponds to a process of processing data for at least one of music search, remixing, editing, and generation, and the process indicated by the dotted line corresponds to a process of generating one or more embeddings and one or more pieces of information included in the metadata of the component block database. Hereinafter, a method for providing a service according to an embodiment of the present invention will be described with reference to FIG. 3a and other drawings.

### Generation/Extraction/Storage of Data and Information Related to the Service of the Present Invention

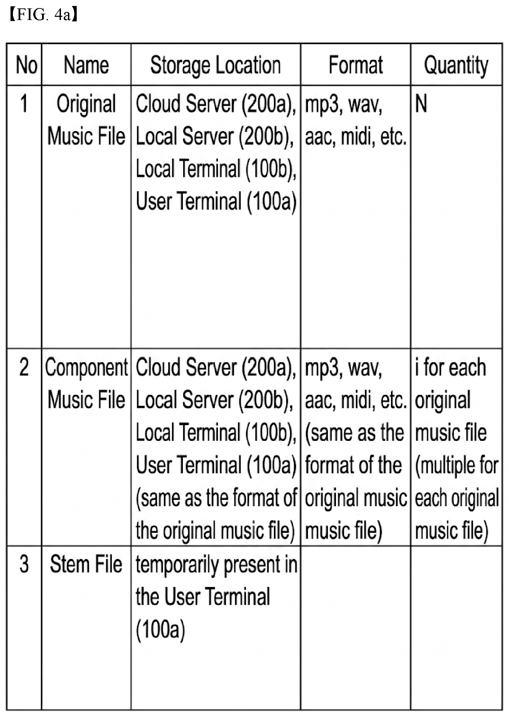

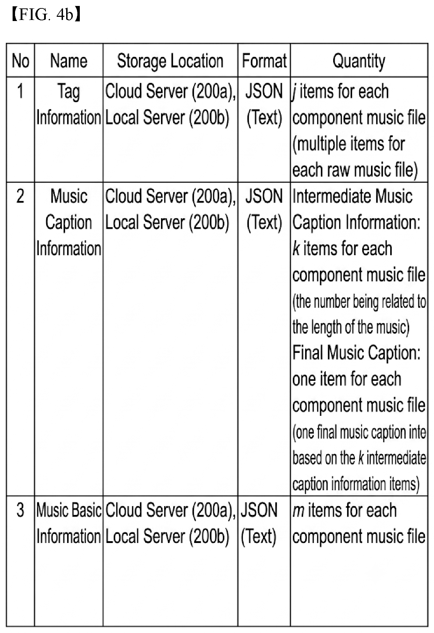

FIG. 3b is a diagram for explaining an artificial intelligence model for obtaining information and/or files according to an embodiment of the present invention. FIG. 4a is a table organizing one or more files for providing a service according to an embodiment of the present invention. FIG. 4b is a table organizing one or more pieces of information for providing a service according to an embodiment of the present invention.

Referring to FIG. 3b, a raw music file (30) may be processed as an input of a component music file extraction model (333), so that a component music file (31) may be generated and/or extracted. The component music file (31) may be referred to as a component block in this specification. Meanwhile, according to an embodiment of the present invention, one or more component music files (31) may be combined to form a stem file (32).

According to an embodiment of the present invention, the raw music file (30) and/or the component music file (31) may be processed as an input of a tag information extraction model (333) to extract tag information (33).

According to an embodiment of the present invention, the raw music file (30) and/or the component music file (31) may be processed as an input of a music captioning model (302) to generate music caption information (36).

According to an embodiment of the present invention, the raw music file (30) and/or the component music file (31) may be processed as an input of a music basic information extraction model (334) to extract music basic information (34). The music basic information may include tempo, key, signature, volume, structure information, and the like. For a specific example, the music basic information extraction model (334) may calculate the BPM (beats per minute) of each raw music file (30) and/or component music file (31) to extract the tempo of the music. For example, the music basic information extraction model (334) may analyze the pitch of each raw music file (30) and/or component music file (31) to extract in which key the song is being played (e.g., C key, G key, etc.). For example, the music basic information extraction model (334) may analyze the signature of each raw music file (30) and/or component music file (31) to extract which signature structure the music follows, such as 4/4 time or 3/4 time. For example, the music basic information extraction model (334) may analyze the volume of each raw music file (30) and/or component music file (31) to extract volume information for each raw music file (30) and/or component music file (31). According to an embodiment of the present invention, the music basic information extraction model (334) may extract structure information such as which part of the song the component music file (31) belongs to (e.g., verse, chorus, etc.). The music basic information extraction model (334) for extracting structure information may include the hierarchical structure analysis model described in this specification.

### Raw Music File (30)

Referring to FIG. 4a, the raw music file (30) according to an embodiment of the present invention is a file in which music in a raw state is recorded. The raw music file (30) may be a music file recorded or generated outside the music-related generation model or application according to the present invention. The raw music file (30) may be human-created music, augmented music, licensed music (human-created music), or the like. The raw music file (30) may also include a music file generated through the music-related generation model or application according to the present invention. The format of the raw music file (30) may be mp3, wav, aac, midi, or the like. In this detailed description, it is assumed that there are a total of N raw music files by default. The raw music file (30) may be recorded in at least one of the memory (220a) of the cloud server (200a), the memory (220b) of the local server (200b), the memory (120b) of the local terminal (100b), and the memory (120a) of the user terminal (100a).

### Component Music File (31)

Referring to FIG. 4a, the component music file (31) is a file in which music extracted from the raw music file (30) is recorded, and in this specification, the component music file (31) may be referred to as a component block. The component music file (31) is a music file in which a component of the raw music file (30) is recorded. The component music file (31) may already exist together with the raw music file (30), or may be extracted by the generation model or application according to the present invention. The extraction of the component music file (31) may be performed in the local server (200b). The extraction of the component music file (31) may use a conventionally known algorithm. Alternatively, according to an embodiment of the present invention, the extraction of the component music file (31) may be performed through a component music file extraction model (331). The format of the component music file (31) is the same as the format of the raw music file (30), and may be mp3, wav, aac, midi, or the like. There may be a plurality of component music files (31) for each raw music file (30). In this detailed description, it is assumed that there are i component music files (31) for a raw music file (30). The number of component music files (31) per raw music file (30) may vary depending on the raw music file (30). The component music file (31) may be recorded in the same place as the raw music file (30), and specifically, may be recorded in at least one of the memory (220a) of the cloud server (200a), the memory (220b) of the local server (200b), the memory (120b) of the local terminal (100b), and the memory (120a) of the user terminal (100a).

### Stem File (32)

Referring to FIG. 4a, a plurality of component music files (31) may be combined and provided to a user in the form of a stem file (32). The stem file (32) may temporarily exist in the user terminal (100a) on which an application program is installed. When the raw music file (30) is a licensed music file, it may be stored in the local server (200b) in the form of a stem file (32). The stem file (32) may mean a file in which only a specific item is separated from the raw music file (30). For example, when the stem is a vocal, the stem file (32) may mean a file in which only the vocal is extracted from the raw music file (30) and stored separately. The stem file (32) takes into account the characteristics of music, and may include a vocal item, a bass item, a guitar item, a MID item, a rhythm item, and the like. The stem file (32) may be a file in which a specific attribute is separated from the raw music file (30) for a certain period of time. Specifically, a sound source constituting a music file is composed as a single result by combining a person's vocal and the sounds of various instruments, and the stem file (32) may mean a file in which data on a single attribute constituting the sound source is stored. For example, the types of stems may correspond to vocals, bass, piano, accompaniment, beat, melody, and the like. The stem file (32) may be a file having the same duration as the raw music file (30), may be data having only a part of the total duration of the raw music file (30), and may also be divided into a plurality of pieces according to the frequency range or its function even for a specific attribute. The stem file (32) of the local server (200b) may be divided into a plurality of component music files (31) in the local server (200b) by the deep learning model according to the present invention.

### Tag Information (33)

Referring to FIG. 4b, the tag information (33) is information extracted from the local server (200b) based on the raw music file (30) or the component music file (31). The extraction of the tag information (33) may be performed by a deep learning model according to an embodiment. The extraction of the tag information (33) may be performed in the local server (200b). The format of the tag information (33) may be json, and other formats are also possible as long as they are in a text format. There may be a plurality of component music files (31) for each raw music file (30). In this detailed description, it is assumed that there are j component music files (31) for the n-th raw music file (30) among the N raw music files (30). The number of tag information (33) per raw music file (30) may vary depending on the raw music file (30). The tag information (33) may have a hierarchical structure with respect to each other. The tag information (33) may be recorded in at least one of the memory (220a) of the cloud server (200a) and the memory (220b) of the local server (200b).

According to the present invention, the tag information (33) may mean information tagging the characteristics of music. The tagging may include the genre, mood, instrument, and creation period information of the music. Specifically, the genres of music may include rock, alternative rock, hard rock, Hip-Hop, soul, classic, jazz, punk, pop, dance, progressive rock, electronic, indie, blues, country, metal, indie rock, indie pop, folk, acoustic, ambient, rnb, heavy metal, electronica, funk, house, and the like. The moods of music may correspond to sad, happy, mellow, chill, easy listening, catchy, sexy, chillout, beautiful, party, and the like. The instruments of music may correspond to guitar, male vocalist, female vocalist, instrumental, and the like. The creation period information of music is information on in which decade the music was created, and for example, may correspond to the 1960s, 1970s, 1980s, 1990s, 2000s, 2010s, 2020s, and the like.

### Music Basic Information (34)

Referring to FIG. 4b, this is information extracted from the local server (200b) based on the raw music file (30). The music basic information may already exist together with the raw music file (30), or may be extracted by a conventionally known method or a deep learning model according to an embodiment. The extraction of the music basic information may be performed in the local server (200b). The format of the music basic information (34) may be json, and other formats are also possible as long as they are in a text format. There may be m pieces of music basic information (34) extracted per one component music file (31). The music basic information (34) may be recorded in at least one of the memory (220a) of the cloud server (200a) and the memory (220b) of the local server (200b). Specifically, since the music basic information (34) is important information in the service, it may exist in the memory (220a) of the cloud server (200a).

### Music Caption Information (36)

Referring to FIG. 4b, the music caption information (36) is information describing music used in the music-related model according to an embodiment of the present invention in natural language. The music caption information (36) may also be called description information in terms of service. It is information extracted from the local server (200b) based on the raw music file (30) or the component music file (31). The extraction of the music caption information (36) may be performed by a deep learning model according to an embodiment. The extraction of the music caption information (36) may be performed in the local server (200b). The format of the music caption information (36) may be json, and other formats are also possible as long as they are in a text format.

The music caption information may be extracted in a number (k) related to the length of the music per one component music file (31), and this may be called intermediate music caption information. According to an embodiment of the present invention, the intermediate music caption information may be aggregated based on a music caption information aggregation model (304). Based on the k pieces of intermediate music caption information, there ultimately exists one piece of aggregated music caption information per one component music file (31), and this may be called final music caption information. In summary, k pieces of intermediate music caption information may be aggregated by the music caption information aggregation model (304) according to an embodiment of the present invention, and final music caption information may be generated. The intermediate and/or final music caption information may be recorded in at least one of the memory (220a) of the cloud server (200a) and the memory (220b) of the local server (200b). Specifically, since the final music caption information is important information in the service, it may exist in the memory (220a) of the cloud server (200a). Meanwhile, the intermediate music caption information may exist only in the process of being extracted by the deep learning model according to an embodiment in the local server (200b).

### Generation of Component Music Files from Raw Music Files

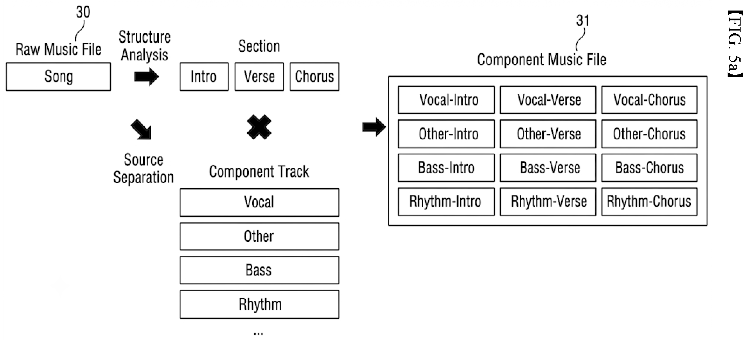

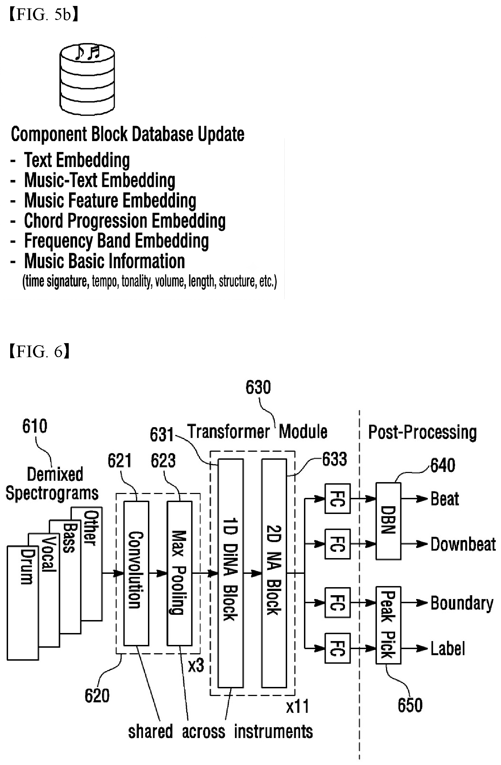

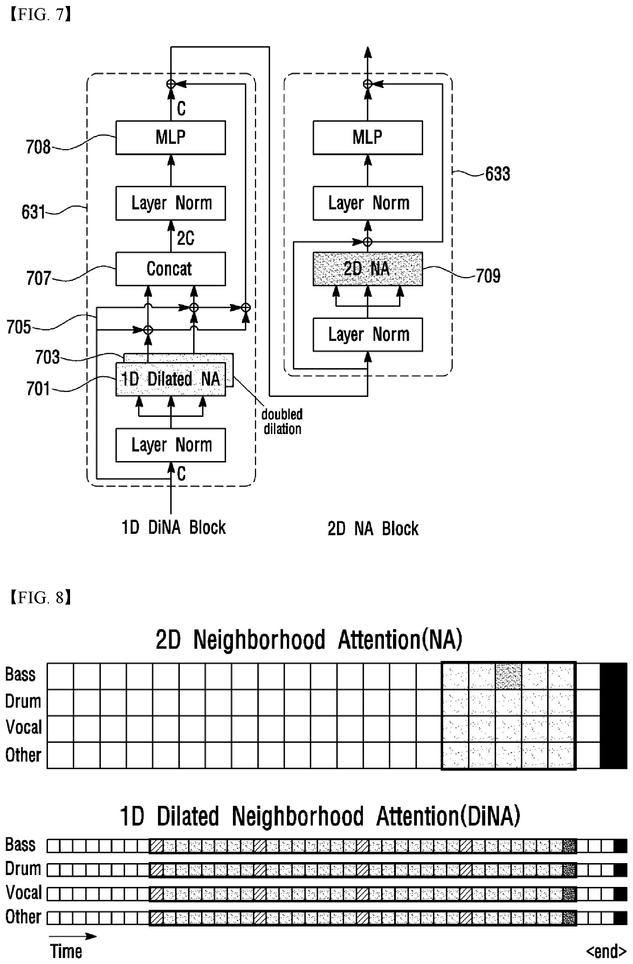

FIG. 5a is a conceptual diagram illustrating a process of obtaining a component music file from a raw music file according to an embodiment of the present invention. FIG. 5b is a conceptual diagram illustrating a database of component music files according to an embodiment of the present invention. FIG. 6 is a conceptual diagram for explaining the configuration of a hierarchical structure analysis model according to an embodiment of the present invention. FIG. 7 is a conceptual diagram for explaining the configuration of a transformer-based artificial intelligence model included in the hierarchical structure analysis model according to an embodiment of the present invention. FIG. 8 is a conceptual diagram for explaining a neighborhood attention model included in the hierarchical structure analysis model according to an embodiment of the present invention. Hereinafter, the process of obtaining the component music file (31) from the raw music file (30) according to an embodiment of the present invention will be described in detail with reference to FIGS. 5a to 8.

As shown in FIG. 5a, according to an embodiment of the present invention, a process of blocking the music information included in the raw music file (30) into component music files (31) is disclosed. The process of blocking into component music files (31) refers to dividing and analyzing the music information included in the raw music file (30) according to various characteristics and storing it in block units. In the present invention, the component music file (31) may be referred to as a component block, and the process of generating the component music file (31) may be referred to as component blocking.

The component blocking according to an embodiment of the present invention may be performed by the component music file extraction model (333) shown in FIG. 3b. The component music file extraction model (333) may generate the component music file (31) for the raw music file (30) through structure analysis based on the hierarchical structure analysis model and source separation based on a source separation algorithm. Specifically, according to the present invention, the music information included in the raw music file (30) may be separated according to temporal structure and instrumental elements. The process of blocking into component music files (31) according to an embodiment of the present invention may proceed in a manner of analyzing the rhythmic and structural information of music by utilizing the deep learning-based model discussed with reference to FIGS. 6 to 8 and the hierarchical structure analysis model based on the neighborhood attention mechanism, and then dividing it into component blocks and storing it in a database. Hereinafter, the component blocking process will be described in detail with reference to the drawings.

### Preprocessing and Source Separation of Raw Music Files

Referring to FIG. 5a, according to an embodiment of the present invention, when a raw music file (30) is input, a source separation process of separating the input raw music file (30) into one or more instrument tracks may be performed. Since the raw music file (30) input according to an embodiment of the present invention is music in a state where one or more instruments are mixed, the role of individual instruments cannot be distinguished. Therefore, each instrument track is extracted through a source separation algorithm, so that analysis and processing of individual tracks become possible in the subsequent processing.

An artificial intelligence-based source separation algorithm may be used in the source separation process according to an embodiment of the present invention. For example, instruments such as vocals, drums, bass, guitar, and rhythm are separated so that each instrument track can be processed independently. The instrument track according to an embodiment of the present invention may be referred to as a component track. In this way, each instrument track (or component track) is extracted from the input raw music file (30) through the source separation algorithm, so that analysis and processing of individual tracks become possible in the subsequent processing. Subsequently, each instrument track (or component track) may be converted into a spectrogram. The converted spectrogram may be a log scale, and through this, high-dimensional data including time and frequency information is obtained. The spectrogram according to an embodiment of the present invention may be a mel-spectrogram to which a mel filter bank is applied, but is not limited thereto.

### Structure Analysis Using Artificial Intelligence Model

FIG. 6 is a conceptual diagram for explaining the configuration of a hierarchical structure analysis model according to an embodiment of the present invention. FIG. 7 is a conceptual diagram for explaining the configuration of a transformer-based artificial intelligence model included in the hierarchical structure analysis model according to an embodiment of the present invention. FIG. 8 is a conceptual diagram for explaining a neighborhood attention model included in the hierarchical structure analysis model according to an embodiment of the present invention.

Referring to FIG. 6, a process of performing beat and downbeat tracking and detecting segment boundaries and functional labels may be performed using a transformer module-based artificial intelligence model. According to an embodiment of the present invention, the transformer-based artificial intelligence model may be simplified by referring to the efficiency of a lightweight TCN model. Specifically, an embodiment of the present invention may inherit the configuration and pipeline of the TCN model for beat, downbeat, and tempo estimation. That is, the same input spectrogram (610) configuration and feature extraction module (620) configuration as the TCN model may be applied. The feature extraction module (620) may include three convolution (621) and max pooling (623) layers.

In addition, referring to FIG. 6, the artificial intelligence model according to an embodiment of the present invention may be configured by stacking eleven sequence modeling blocks (e.g., transformer modules (630)). In addition, a Dynamic Bayesian Network (DBN) (640) may be used to post-process the beat and downbeat. Since the TCN model focuses only on beat and downbeat tracking, an embodiment of the present invention may apply a peak picking (650) method to post-process the segment boundaries and functional labels. The peak picking method is a method of normalizing the segment boundary probability using a sliding window average and selecting the highest probability. In an embodiment of the present invention, thresholding may not be applied after normalization. In addition, unlike the TCN model using a window of 18 seconds, a window of 24 seconds may be used. The specific numerical values described above are merely examples, and the present invention is not limited thereto.

### Processing of Input Data

According to an embodiment of the present invention, one or more instrument tracks (or component tracks) may be converted into spectrograms and processed as inputs of the artificial intelligence model as demixed spectrograms (610).

Since the transformer-based artificial intelligence model according to an embodiment of the present invention is excellent at learning long-term temporal dependencies, it can effectively analyze rhythm patterns repeated within music or changes in melody. The transformer-based artificial intelligence model according to an embodiment of the present invention may identify a rhythm pattern by tracking the beat and downbeat (640) for the spectrogram of the input component track. In addition, the transformer-based artificial intelligence model according to an embodiment of the present invention may detect a segment boundary by detecting the structural boundary or transition point of music, and divide it into respective segments. The transformer-based artificial intelligence model according to an embodiment of the present invention may structurally analyze music by assigning a functional label (e.g., a Start section, an Intro section, an End section, an Outro section, a Break section, a Bridge section, an Inst section, a Solo section, a Verse section, a Chorus section, etc.) to each segment.

Meanwhile, according to an embodiment of the present invention, at least one of the assigned functional labels or predicted values may be integrated with each other. For example, an operation such as integrating a Start section into an Intro section or integrating an End section into an Outro section may be performed. According to an embodiment of the present invention, an Intro section, a Verse section, a Chorus section, a Bridge section, an Outro section, and the like may be used as predicted values through the above integration operation, but the specific types of sections are merely examples for explanation, and the present invention is not limited thereto.

### Feature Extraction Module (620)

Referring to FIG. 6, the demixed spectrogram (610) according to an embodiment of the present invention may be processed as an input of the feature extraction module (620). The feature extraction module (620) according to an embodiment of the present invention may extract and preprocess features from the input demixed spectrogram (610) and transfer them to the transformer module (630), which is the next step. Specifically, the feature extraction module (620) according to an embodiment of the present invention may include convolution (621) and max pooling (623).

Convolution (621) and max pooling (623) play an important role in extracting features of music data and reducing dimensions in a deep learning model.

According to an embodiment of the present invention, convolution (621) may mean an operation of processing input data (e.g., an image or a spectrogram) to extract features included therein. Through the convolution (621) according to an embodiment of the present invention, local features such as rhythm, frequency, and tone may be extracted by processing the input music data. The convolution (621) according to an embodiment of the present invention applies a small-sized matrix called a filter or kernel to the input data to enable detection of a specific pattern (e.g., an edge, a texture, etc.).

Through this, a feature map of the input data is generated, and high-level features may be extracted by gradually abstracting the data through several layers. According to an embodiment of the present invention, a local pattern is detected in a small region through the convolution (621) filter, and through this process, important information such as rhythmic patterns on the frequency and time axes of the input spectrogram and interactions between instruments is learned. According to an embodiment of the present invention, a nonlinear activation function (e.g., ReLU, etc.) may be applied after the convolution (621) operation to model nonlinear patterns. Through this, the model can learn complex musical features beyond simple linear patterns.

According to an embodiment of the present invention, max pooling (623) means a downsampling technique for reducing unnecessary data and maintaining important information in the feature map generated or extracted through the convolution (621). By the max pooling (623) according to an embodiment of the present invention, the dimension of the feature map may be reduced while maintaining the main features extracted through the convolution (621) by reducing the spatial size by selecting the largest value. According to the max pooling (623) according to an embodiment of the present invention, a result may be generated by selecting only the maximum value within a small region of given input data.

That is, since max pooling (623) selects the most prominent (largest) feature among the features extracted from the convolution (621), it removes less important details while maintaining important information of the data. Through this, the spatial dimension of the data is reduced to reduce memory usage and computational load, invariance that is less sensitive to changes in the position of the data is strengthened, and important information may be maintained while reducing noise. Through this, the model can better learn the main rhythm patterns or structural features without focusing on unnecessary details. According to an embodiment of the present invention, when the dimension is reduced through max pooling (623), the number of parameters is reduced, so it also helps to prevent the model from overfitting, which may be particularly advantageous when the data size is limited.

The convolution (621) and max pooling (623) according to an embodiment of the present invention act complementarily to each other to extract low-level features of the input data and compress them so that they can be used efficiently in the learning process. The convolution (621) according to an embodiment of the present invention is used to extract low-level features from the input demixed spectrogram (610), and the max pooling (623) reduces the size of the feature map obtained from the convolution (621) to maintain only important information so that it is transferred to the next step. Through this process, it contributes to maximizing data processing efficiency and increasing the accuracy of model learning. Meanwhile, according to an embodiment of the present invention, as shown in FIG. 6, the operation of the feature extraction module (620) may be performed three times, but is not limited thereto.

### Transformer Module (630)

According to an embodiment of the present invention, the data preprocessed through the feature extraction module (620) may be processed as an input of the transformer module (630). The transformer module (630) according to an embodiment of the present invention may be for tracking beats and downbeats based on a neighborhood attention mechanism. The present invention utilizes the characteristic that music has a hierarchical organization composed of clear hierarchical structural units. The basic level of music is composed of meter elements such as beats, bars, and segments, which may form the basic rhythmic structure of music. Moving up in the hierarchical structure, these meter elements are combined into functional units such as verses and choruses, forming the structure of the entire music. Despite the inherent interdependence of these hierarchical levels, existing studies have dealt with them by dividing them into two tasks, ignoring these attributes: beat/downbeat tracking for lower-level structure prediction, and segment segmentation and labeling for higher-level structure prediction.

As a result, the potential benefits that can be obtained from the interaction between structures have often been missed. However, jointly learning hierarchical information levels in an integrated model has been a task to be solved due to the fact that individual songs represented by audio data have relatively long time units and are high-dimensional. In addition, songs contain various acoustic and musical variations within the meter and functional structure layers. In the present invention, beats, downbeats, segments, and functional structure labels are all predicted simultaneously with one transformer module-based artificial intelligence model, showing synergy between these tasks in multi-task learning.

According to an embodiment of the present invention, an efficient model capable of learning large-unit information from an audio frame sequence dealing with long time units may be designed. In the beat/downbeat tracking task, the receptive field of the model must be set large to cover a sufficient number of beats and downbeats. According to an embodiment of the present invention, a Temporal Convolutional Network (TCN) may be used, which is a type of convolutional neural network to which a dilation operation is applied, where the size of the receptive field increases exponentially as the number of layers increases.

According to an embodiment of the present invention, a SpecTNT-TCN model may be used, which uses a time-frequency transformer (SpecTNT) for efficient long-term representation learning and integrates it with a TCN module to lead to performance improvement.

According to an embodiment of the present invention, a Beat Transformer model that applies a dilation operation to a self-attention layer and uses source-separated input may be used.

Unlike beats/downbeats, the temporal variation of segment boundaries and functional structure labels may be much rarer. Accordingly, some conventional studies have understood it as a segmentation problem based on the self-similarity of local audio features within a song, and have studied better audio features or embeddings by utilizing temporal similarity, semantic labels, and structural labels. Other studies have studied segmentation algorithms that use the principles of uniformity, repetition, and novelty at the segment level.

However, according to embodiments of the present invention, at least one of the following three main features may be employed. First, according to an embodiment of the present invention, a neighborhood attention mechanism may be used to allow the model to generate an attention window that captures the closest possible neighbors without unnecessary computation. This may contribute to widening the receptive field of the model even without padding.

Second, according to an embodiment of the present invention, the model may be set to predict not only beats and downbeats but also segment boundaries and functional structure labels directly from the audio input. According to an embodiment of the present invention, the performance interaction may be investigated through a comprehensive ablation study when all tasks are integrated and learned.

Third, according to an embodiment of the present invention, the model size may be greatly reduced while following the configuration of the TCN model. The model according to an embodiment of the present invention may be evaluated on the Harmonix Set, which includes all beat and functional structure labels. The model according to an embodiment of the present invention may demonstrate that it surpasses the state-of-the-art performance in four tasks while maintaining a relatively small number of parameters (about 300,000).

According to an embodiment of the present invention, new performance may be achieved based on a CNN (Convolutional Neural Networks) or a transformer that predicts "boundaryness" or "chorusness" directly from audio. For a specific example, according to an embodiment of the present invention, a dilated self-attention layer and source-separated input may be utilized in the Beat Transformer model.

Referring to FIG. 6, the transformer module (630) according to an embodiment of the present invention may be composed of two different blocks based on two neighborhood attention mechanisms, namely, a Dilated 1D Neighborhood Attention (DiNA) block (631) and a 2D Neighborhood Attention (NA) block (633). The Dilated 1D Neighborhood Attention (DiNA) block (631) according to an embodiment of the present invention models long-term temporal dependencies through a dilation operation. The 2D Neighborhood Attention (NA) block (633) according to an embodiment of the present invention models the dependencies between instruments by focusing on the local neighborhood while maintaining locality.

### Details of Neighborhood Attention Mechanism

FIG. 7 is a conceptual diagram for explaining the configuration of a transformer-based artificial intelligence model included in the hierarchical structure analysis model according to an embodiment of the present invention. Referring to FIG. 7, the 1D DiNA block (631) according to an embodiment of the present invention may include two DiNA modules (701, 703) with reference to the TCN model. According to an embodiment of the present invention, the second DiNA module (703) among the two DiNA modules may double the dilation. Accordingly, musical attributes can be learned at various levels of integer multiples. The outputs of the two DiNA modules (701, 703) are added to a skip connection (705), and then combined (707) and transferred to the next layer.

The 1D DiNA block (631) according to an embodiment of the present invention may include a multilayer perceptron (MLP) (708) composed of two fully connected layers. The multilayer perceptron (708) according to an embodiment of the present invention may initially increase the embedding dimension to 8C, and then reduce the embedding size to the original C size to maintain consistency.

The 2D NA block (633) according to an embodiment of the present invention may include a 2D NA (709). Here, the 2D NA (709) is identical to the original NA that is not dilated.

According to an embodiment of the present invention, the transformer module (604) composed of the Dilated 1D Neighborhood Attention block (631) and the 2D Neighborhood Attention (NA) block (633) may be performed a total of eleven times, and the size of the receptive field is exponentially dilated each time. That is, the dilation of the receptive field size starts from 2 times and proceeds like 4 times, 8 times, and the receptive field size may increase up to 2^10 and 2^11. Accordingly, the receptive field sizes of the first and second DiNA modules may be set to about 41 seconds and 82 seconds, respectively. In all transformer blocks, the embedding dimension C may be fixed at 24. The numerical values described above are merely one embodiment of the present invention, and the present invention is not limited thereto.

FIG. 8 is a conceptual diagram for explaining a neighborhood attention model included in the hierarchical structure analysis model according to an embodiment of the present invention. Specifically, FIG. 8 exemplarily illustrates that the neighborhood attention model is applied at the last part of a song, and FIG. 8 is a conceptual diagram for explaining an attention window used in the neighborhood attention model included in the hierarchical structure analysis model of music according to an embodiment of the present invention. The lower part of FIG. 8 illustrates the attention window of the 1D DiNA (701), and the upper part illustrates the attention window of the 2D NA (633).

The 1D DiNA (701) shown at the lower part of FIG. 8 is used to model long-term temporal dependencies. This focuses on learning the relationship between temporally distant sections. The window according to an embodiment of the present invention may be configured in a manner of securing a wider receptive field along the time axis by applying a dilation operation. That is, as shown at the lower part of FIG. 8, the dilated window is a window to which a dilation operation is applied in a manner of sampling data at regular intervals along the time axis. The DiNA according to an embodiment of the present invention may learn the relationship between distant time frames using the dilated window. For example, it may capture the long-term dependency that occurs between the chorus and verse of a song. Unlike a general sliding window, the dilated window selects distant time frames at regular intervals and applies attention. Through this, rhythm patterns or structural changes occurring over a long time range may be analyzed. In addition, through this, unlike a traditional sliding window that analyzes only local information in a specific time section, the relationship between distant time sections may be analyzed.

As shown in FIG. 8, it can be seen that the DiNA can operate without padding even at the end of a song. This contributes to reducing computational waste due to unnecessary padding when processing data of a long time range. For example, in the case of having a large receptive field such as 82 seconds, unlike the conventional mechanism which could require 41 seconds of padding in the worst case, the 1D DiNA (701) does not require zero padding, thereby reducing unnecessary computational complexity.

The 2D NA shown at the upper part of FIG. 8 may be used to model interactions between instruments and to learn the interdependence of instruments locally. The window according to an embodiment of the present invention may be configured based on temporal frames and neighbors per instrument. Through this, data of several adjacent instruments in a specific time zone may be intensively analyzed. The neighborhood attention window according to an embodiment of the present invention may be limited to surrounding time frames and neighboring instruments located around each instrument at that time. According to an embodiment of the present invention, the neighborhood attention window may be used to efficiently capture the interaction between instruments and to analyze the frequency band and tone of each instrument. Through this, the 2D NA may maintain the local relationship between instruments and focus on analyzing how the instruments are in harmony. In addition, the 2D NA may adjust the frequencies so that they do not collide with each other in a part where the instruments are played simultaneously.

Referring to FIG. 8, an embodiment of the present invention may be designed to simultaneously learn the local inter-instrument interactions and the long-term temporal relationships of music by using the 1D DiNA and 2D NA mechanisms that play complementary roles to each other.

Meanwhile, according to an embodiment of the present invention, the 1D DiNA block and the 2D NA block constituting the transformer module have a structure of performing a plurality of layers in which the size of the dilated window of the DiNA block is exponentially dilated. The exponential dilation according to an embodiment of the present invention may mean that the window is gradually expanded wider over time in a 2^l manner. Here, the exponent l represents a block number or a layer number. That is, as each layer proceeds, the dilation rate increases by two times, so that a wider range of time data can be captured. Meanwhile, as shown in FIG. 8, the kernel size may be 5, but is not limited thereto.

In the present invention, a block or layer is performed a plurality of times while exponentially dilating the window. According to an embodiment of the present invention, performing a plurality of times may mean that a plurality of transformer modules are sequentially stacked. By applying the dilated window in each module, an increasingly wider time range can be analyzed. In an embodiment of the present invention, it may be performed eleven times in consideration of the length of the music, but is not limited thereto.

For a specific example, in the first few modules, local dependencies within a short time range are captured, and in increasingly deeper modules, dependencies in a long time range may be captured. The initial layers may contribute to learning detailed and local patterns of music, and the later layers may contribute to learning the overall structure of the song or rhythm changes at long time intervals. Subsequently, since the transformer module uses an exponentially dilated window, it may capture musical patterns or structural changes over a long time (e.g., rhythm changes between verse and chorus, repetition patterns of a song, etc.). This plays an important role in learning long-term temporal dependencies. For example, in the initial layers with a small dilation rate, detailed rhythms within a short time interval of the song or interactions between instruments are learned, and in the later layers with a large dilation rate, structural changes in the long section transitioning from verse to chorus may be learned.

The method of utilizing the exponentially dilated window according to an embodiment of the present invention can process data of a long time range at once, so it has higher computational efficiency than the conventional sliding window method. In particular, unnecessary redundant computation may be reduced when analyzing a long song. In addition, a dilated attention mechanism such as the DiNA according to an embodiment of the present invention can efficiently compute attention without padding even at the end of a song, so the amount of computation is greatly reduced.

Through the 1D DiNA block (631) and the 2D NA block (633) included in the transformer module (630) according to an embodiment of the present invention, different time ranges can be analyzed, so information can be extracted at various time scales, from local patterns of a short time range to structural patterns of a long time range. Through this, complex rhythmic and structural features of music data can be better captured. In addition, as the operation of the transformer module (630) is performed a plurality of times, the information learned in each module is gradually integrated, and through this, the overall structural information of music and detailed rhythm patterns, which may be very important information in the music generation and remix process, can be learned simultaneously.

### Post-processing

As shown in FIG. 6, according to an embodiment of the present invention, the beat and downbeat information is post-processed and optimized using a Dynamic Bayesian Network (DBN) (640). Through such post-processing, the rhythm pattern between each block may be adjusted to be naturally connected.

In addition, according to an embodiment of the present invention, a peak picking method based on a peak picking model (650) may be applied to normalize the probabilities of segment boundaries and functional labels, and then a boundary having the highest probability may be selected. Through such post-processing, the transition between blocks may be made smoothly.

### Section Separation Through Structure Analysis Along the Time Axis

Again, referring to FIG. 5a, FIG. 5a is a conceptual diagram illustrating a process of obtaining a component music file from a raw music file according to an embodiment of the present invention. As shown in FIG. 5a, the raw music file (30) may be separated along the time axis according to its structure based on the hierarchical structure analysis model according to an embodiment of the present invention. The raw music file (30) may be separated into section units along the time axis. As shown in FIG. 5a, when the raw music file (30) according to an embodiment of the present invention is separated along the time axis, it may be separated into an Intro section, a Verse section, and a Chorus section. The intro is a section corresponding to the introduction of a song, and may be a section including musical elements for setting the mood of the song and attracting the listener's interest.

The verse is a section in which the main narrative content of a song is delivered, and may be a section that generally serves to develop a story or deepen a theme through lyrics and melody. The chorus is a refrain part in which the central theme of a song is repeatedly expressed, and may be a section that serves to provide an emotional impact to the listener and strengthen the identity of the song through a memorable melody and a strong sense of rhythm. Meanwhile, in this specification, the description is based on the raw music file (30) being separated into intro, verse, and chorus sections, but the present invention is not limited to being separated into the above-described sections.

That is, it should be understood that, according to embodiments of the present invention, it may be divided into various sections such as: a Bridge section, which is a musical transition part distinguished from other main sections of a song; an Outro section, which is a section for organizing the mood of a song or ending it calmly, similar to the intro, as the ending part of a song; a Pre-Chorus section, which is a transition section located between the verse and the chorus and serves to heighten the tension or expectation leading to the chorus; a Post-Chorus section, which is a section following the chorus and serves to emphasize the highlight of the song by expanding or repeating the melody or theme of the chorus; an Interlude section, which is a short instrumental section inserted in the middle of a song and serves to refresh the mood or diversify the structure of the song through instrumental performance without vocals; a Drop section, which is a section mainly used in electronic music and is a part where intense beats and melodies burst out after a tense build-up; an Extended Chorus section, which is a section configured to be longer than a general chorus and is for further maximizing the emotion of a song or extending the climax; and a Variation Verse section, which is a section that gives change to the progression of a song by slightly modifying the melody or lyrics of an existing verse.

### Generation of Component Music Files

As described above, according to an embodiment of the present invention, a source separation process of separating the raw music file (30) into one or more instrument tracks through a source separation algorithm may be performed. In addition, a structure analysis process of separating the raw music file (30) along the time axis through the hierarchical structure analysis model may be performed. Thereafter, as shown in FIG. 5a, based on the sections separated for one raw music file, one or more temporal and per-instrument component music files (31) may be generated. Through this, in each temporally separated section, a music file related to a track divided by instrument may be stored as an independent component music file.

For example, each independent component music file may be generated, such as a drum track of a chorus section interval or a guitar track of a verse section interval. In this specification, the component music file may be referred to as a 'component block,' and the process of generating the component music file may be referred to as 'component blocking.'

Each component music file (or component block) may include the rhythm or melody of one instrument within a certain time range, and according to an embodiment of the present invention, based on one or more component blocks separated in this way, an operation of reconstructing, remixing, editing, or generating music may be performed by selecting a block suitable for a specific instrument and a specific interval.

According to an embodiment of the present invention, it is also possible to further subdivide each section (e.g., verse, chorus, intro, etc.) based on the time axis to perform component blocking. For example, in a song of 4/4 time, a component track for one bar may be generated as one component block. This method may include a process of dividing and analyzing long and complex music data into short time units through the DiNA block.

According to an embodiment of the present invention, each component block includes various musical features such as tempo, beat, downbeat information, segment boundaries and labels, and interactions between instruments. Through the peak picking and DBN post-processing methods described above, the information of each block may be refined and optimized.

### Database of Component Music Files

FIG. 5b is a conceptual diagram illustrating a database of component music files according to an embodiment of the present invention. According to an embodiment of the present invention, each component block may be stored in a database together with related metadata such as tempo, beat, instrument configuration, and segment information. Such a component block database is designed to be used later for remix or music generation tasks. For example, a block suitable for a specific tempo and key may be searched.

In addition, according to an embodiment of the present invention, each component block includes information of various dimensions. For example, one block may simultaneously store not only the tempo and key of the corresponding interval but also the instrument configuration, frequency band, rhythm pattern, functional label, and the like. Accordingly, one or more embeddings may be extracted for each component block based on one or more embedding models, and each component block may be stored in the database together with the extracted embeddings. For a specific example, according to an embodiment of the present invention, the component block database may include at least one of a text embedding, a music text embedding, a music feature embedding, a chord progression embedding, a frequency band embedding, and music basic information (e.g., signature, tempo, key, volume, length, structure, etc.) extracted from the corresponding component block. Based on this, search and filtering of component blocks may be performed based on similarity determination between an input embedding and an embedding of a component block previously stored in the database.

That is, according to an embodiment of the present invention, a user can easily search for a component block suitable for a functional label, tempo, instrument configuration, and the like according to similarity determination with the embedding of the component block, based on various data such as text data input through a user prompt, tag data input through a user prompt, image data, video data, music data, and audio data, and the embeddings extracted in relation thereto. The embedding model according to an embodiment of the present invention may be an embedding model based on a neighborhood attention mechanism. Similarity calculation based on embeddings, and search and filtering of component blocks, and the like will be described in detail later.

### Data input process via prompt

Referring to FIG. 3a, a user terminal (100a) and/or a local terminal (100b) according to an embodiment of the present invention may receive one or more pieces of information, such as tag information (33), image information, video information, music information, audio information, text information (e.g., natural language-based text, computer language-based text, etc.), through a user input unit (e.g., user interface, prompt, etc.). The input information may be transmitted to a cloud server (200a) and/or a local server (200b) according to an embodiment of the present invention, and may be processed or stored to provide the service of the present invention.

For example, text information according to an embodiment of the present invention may include natural language-based text such as "a funky 2 minute 30 second track with intense, danceable drum beats and a prominent bassline" or "a tranquil forest with drizzling rain." For example, image information and/or video information according to an embodiment of the present invention may be images and/or videos that can induce imagery such as "club atmosphere" or "tranquil forest atmosphere." Music and/or audio information according to an embodiment of the present invention may be music and/or audio having an atmosphere such as "funky music" or "tranquil music." It should be understood that the examples of the above-described information are for illustrative purposes only, and the present invention is not limited thereto.

### Captioning Process for Input Data

According to an embodiment of the present invention, when image and/or video information is input, caption information for the input image and/or video information may be generated through an image captioning model (301). According to an embodiment of the present invention, when music and/or audio information is input, caption information for the input music and/or audio information may be generated through a music captioning model (302). Here, at least one of the image and/or video information and the music and/or audio information may be input by a user, but may also be at least one of data pre-stored in a database according to an embodiment of the present invention (e.g., video files stored in the database, component music files, etc.).

According to an embodiment of the present invention, caption information may be natural language-based information generated for various information such as input images, videos, music, audio, etc. Caption information according to an embodiment of the present invention may be information expressing features of the input information using natural language-based text information. Alternatively, caption information according to an embodiment of the present invention may be information describing the input information using natural language-based text information.

Image caption information according to an embodiment of the present invention may refer to caption information based on image information and/or video information. Music caption information according to an embodiment of the present invention may refer to caption information based on music information and/or audio information. Hereinafter, captioning models according to an embodiment of the present invention (e.g., image captioning model (301), music captioning model (302), etc.) will be described in detail.

### Image Captioning Model (301)

According to an embodiment of the present invention, image information input through a user input unit (e.g., user interface, prompt, etc.) and/or from a database may be processed as input to the image captioning model (301), and the image captioning model (301) may output image caption information, which is text information about the input image. For example, the output image caption information may include text describing the input image information, such as "a night view of a city with several buildings and several cars on the street."

### Music Captioning Model (302)

The music captioning model (302) according to an embodiment of the present invention is an artificial intelligence model capable of describing musical features such as genre, mood, and instruments used in music in natural language. According to an embodiment of the present invention, music information can be processed as natural language data through the music captioning model (302), and music files can be searched based on information input by the user (e.g., based on similarity with text data input by the user).

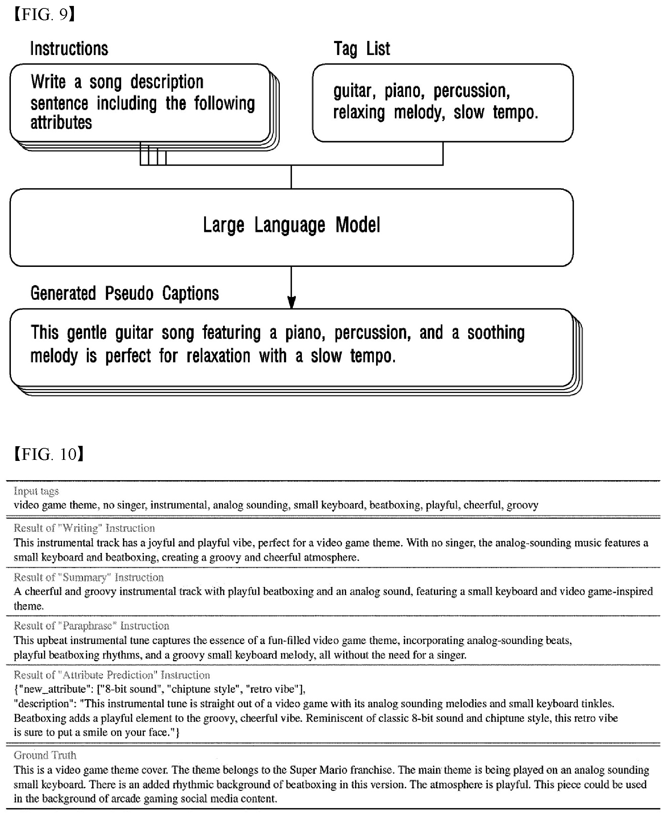

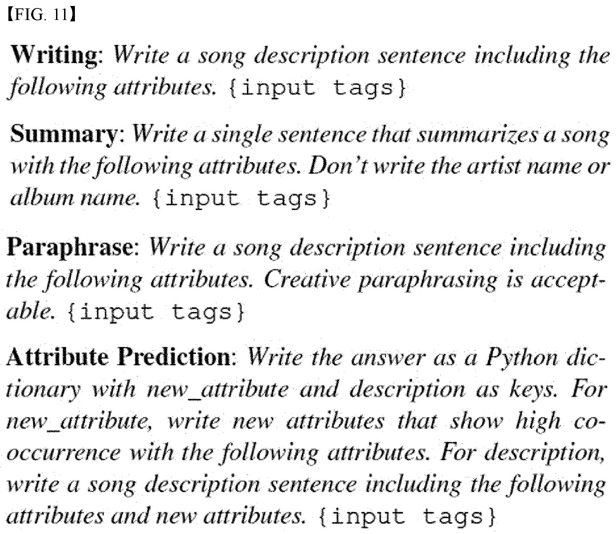

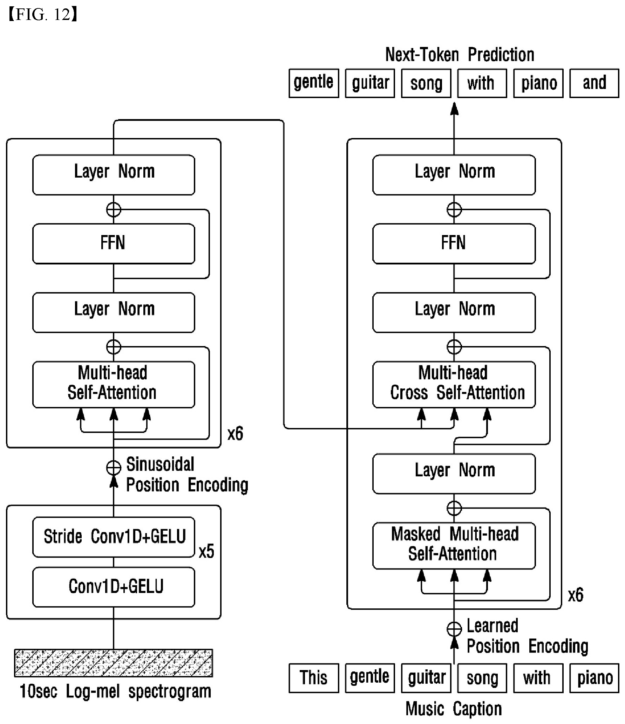

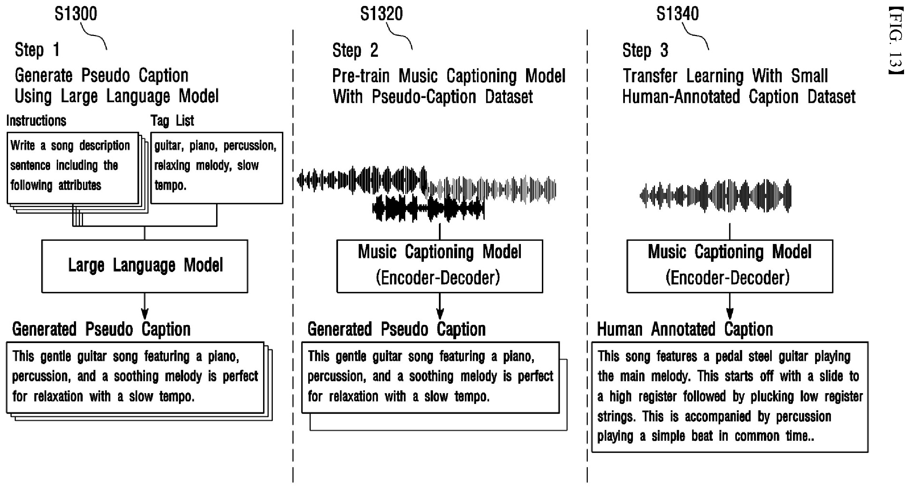

FIG. 9 is a diagram for explaining a process of generating pseudo captions according to an embodiment of the present invention. FIG. 10 is a diagram for explaining an example of instructions input to generate captions according to an embodiment of the present invention. FIG. 11 is a diagram for explaining an example of instructions input to generate captions according to an embodiment of the present invention. FIG. 12 is a conceptual diagram for explaining the configuration of a cross-modal encoder-decoder transformer according to an embodiment of the present invention. FIG. 13 is a diagram for explaining a process of obtaining a music captioning model (302) according to an embodiment of the present invention. Hereinafter, the music captioning model (302) according to an embodiment of the present invention will be described with reference to FIGS. 9 to 13.

According to an embodiment of the present invention, music information input through a user input unit (e.g., user interface, prompt, etc.) may be processed as input to the music captioning model (302), and the music captioning model (302) may output music caption information, which is text information about the input music.

The process of generating and/or outputting music caption information according to an embodiment of the present invention may be understood as a task for searching music information by generating natural language information related to the input music information. Natural language information related to music information can be mainly provided in sentence form, and is distinguished from other music semantic understanding tasks such as tagging tasks that assign tags to music information. Conventionally, there was technology for generating music caption information using a deep encoder-decoder framework developed for deep learning machine translation. In addition, some prior art used a pre-trained music tagging model as a music encoder and utilized RNN layers initialized with pre-trained word embeddings for text generation.

Other prior art combined a pre-trained harmonic CNN encoder and LSTM layers to introduce a temporal attention mechanism for alignment between audio and text. Other prior art used pre-trained GPT-2 to generate titles and descriptions for playlists. However, the problem with prior art related to music caption generation is the lack of large-scale public datasets. Prior art used private production music datasets (e.g., private data including 44 million music-text pairs included in video platforms), but this approach was not reproducible or usable by other developers. Community-driven data collection initiatives have been proposed to solve this data problem, but with the scale of datasets to date, it is still difficult to successfully train music caption generation models.

To solve such problems, according to an embodiment of the present invention, a method of generating a dataset of music caption information by applying a natural language processing-based artificial intelligence model to a tagging dataset may be provided. According to an embodiment of the present invention, music caption information that is semantically consistent, grammatically accurate, and has clear and rich vocabulary can be obtained from provided tags. Such an approach at the dataset level according to an embodiment of the present invention is uncomplicated and practical, and has the effect of solving the difficulty of music caption work with data. According to an embodiment of the present invention, once the generation of the dataset is completed, there is an effect that a music caption model can be easily trained through supervised learning.

Referring to FIG. 13, a method of obtaining a music captioning model (302) according to an embodiment of the present invention includes generating pseudo captions using a natural language processing-based artificial intelligence model (S1300), training the music captioning model (302) based on the generated pseudo caption dataset (S1320), and transfer learning the music captioning model (302) pre-trained based on the pseudo caption dataset, based on label data (S1340).

### Generation of Pseudo Caption Dataset

FIG. 9 is a diagram for explaining a process of generating pseudo captions (or pseudo music captions) according to an embodiment of the present invention. FIG. 10 is a diagram for explaining an example of instructions input to generate captions according to an embodiment of the present invention. FIG. 11 is a diagram for explaining an example of instructions input to generate captions according to an embodiment of the present invention. With reference to FIGS. 9 to 11, the step (S1300) of generating pseudo music captions using a natural language processing-based artificial intelligence model shown in FIG. 13 will be described.

Referring to FIG. 9, a process of generating pseudo captions according to an embodiment of the present invention is shown. According to an embodiment of the present invention, a tag dataset designated for the music may be pre-stored for each music file (e.g., raw music file, etc.). The tag dataset according to an embodiment of the present invention may be label data, but may be tag data extracted from music information through a tag information extraction model (333).

Referring to FIGS. 10 and 11, tag datasets and instruction data input to a natural language processing-based artificial intelligence model in a process of generating pseudo captions according to an embodiment of the present invention are shown. According to an embodiment of the present invention, pseudo captions for music can be generated by inputting natural language-based instruction data together with a tag dataset designated for a music file to a natural language processing-based artificial intelligence model (e.g., LLM, etc.). For example, a tag dataset designated for music information according to an embodiment of the present invention may include tags such as 'guitar, piano, percussion, soothing melody, slow tempo.' For example, instructions according to an embodiment of the present invention may include at least one of instructions to output long sentences (e.g., Writing instructions), instructions to output summaries, instructions to express and output tags using new terms (e.g., Paraphrase instructions), and instructions to predict characteristics of music.

According to an embodiment of the present invention, the natural language processing-based artificial intelligence model generates and returns sentences that can describe tag information of music according to the method given by the instruction as a condition, based on the tag data and instruction data input through the prompt.

The artificial intelligence model according to an embodiment of the present invention can perform better in interaction with instructions by being initially trained with a large corpus and enormous computing resources, and then fine-tuned with reinforcement learning using human feedback (RLHF). According to an embodiment of the present invention, in order to verify tag datasets designated for each music (e.g., pre-input label tags or tags extracted through the tag information extraction model (333)), user feedback can be utilized.

Specifically, when a user inputs at least one of text data (e.g., natural language information such as "make music suitable for a rainy day"), image data, and music data through a prompt to generate desired music, music caption information is generated through the pseudo caption generation process according to an embodiment of the present invention, and music generated based on the generated music caption information (the generated music may be an entire song, but may be part of a song) can be output.

If the user provided positive feedback such as downloading the output music, this may mean that the tag dataset designated in the pseudo caption generation process according to an embodiment of the present invention is well designated for the music. Therefore, based on the user's feedback, in the process of training the music captioning model (302) according to an embodiment of the present invention, information such as "this tag dataset is a dataset that received positive feedback from the user," 'image information input by the user,' 'music information input by the user,' 'prompt information input by the user,' etc. is additionally input, thereby improving the output of the music captioning model (302).

Meanwhile, as shown in FIG. 10, according to an embodiment of the present invention, the artificial intelligence model can be trained by utilizing ideal data or reference data (e.g., Ground Truth) that the natural language processing-based artificial intelligence model hopes to output as pseudo music captions.

Meanwhile, according to an embodiment of the present invention, various system prompts may be utilized, not limited to the examples of instructions shown in FIGS. 10 and 11. According to an embodiment of the present invention, when at least one of tag information, image caption information, music caption information, and text information is input, system prompts for specifying the output format and examples of the large language model are utilized for each case, thereby improving the output result of pseudo captions according to the input data.

### Pre-training of Music Captioning Model (302) Based on Pseudo Caption Dataset

Referring to FIG. 13, the method of obtaining a music captioning model (302) according to an embodiment of the present invention may include training the music captioning model (302) based on a pseudo caption dataset generated using a natural language processing-based artificial intelligence model (S1320). That is, according to an embodiment of the present invention, the music captioning model (302) can be pre-trained by designating a set of pseudo caption data and music information generated according to an embodiment of the present invention as a pseudo label. As shown in FIG. 13, a pseudo caption dataset can be generated in large quantities through the step (S1300) of generating pseudo captions using a natural language processing-based artificial intelligence model. In the step (S1320) of training the music captioning model (302) based on the generated pseudo caption dataset, the pseudo caption dataset generated in step S1300 is designated as a pseudo label, and the music captioning model (302) can be trained so that when a music file (e.g., raw music file, component music file, etc.) is input to the music captioning model (302), the pseudo caption data designated as a pseudo label is output.

### Generation of Music Captioning Model (302) Through Transfer Learning

Referring to FIG. 13, the method of obtaining a music captioning model (302) according to an embodiment of the present invention may include transfer learning the music captioning model (302) pre-trained based on the pseudo caption dataset, based on a label dataset (S1340). The music captioning model (302) according to an embodiment of the present invention may include a natural language processing-based artificial intelligence model.

The music captioning model (302) according to an embodiment of the present invention is a natural language processing-based artificial intelligence model, which can be implemented as a large language model, and a system prompt for instructing how the large language model operates can be utilized. System prompts according to an embodiment of the present invention may include system prompts for designating the purpose and role of the music captioning model (302), system prompts for designating matters to be considered for output of the music captioning model (302), system prompts for designating the output format or examples of the music captioning model (302), system prompts for informing examples of user input to the music captioning model (302), etc.

For example, a system prompt for designating the purpose and role of the music captioning model (302) according to an embodiment of the present invention may include instructions such as "Write the most appropriate music description considering the given input and individual request."

System prompts for designating matters to be considered for output of the music captioning model (302) according to an embodiment of the present invention may include instructions such as "Add musical descriptions that match the prompt entered by the user. However, do not use expressions not related to musical characteristics," "Never use sentences, words, or expressions used in image captions to describe music. Instead, consider only additional musical characteristics that go well with the image caption," "The content of the music caption should be referenced only after considering all other attributes," "After considering all other attributes, reference the content of tags such as genre/mood extracted by the tag information extraction model."

System prompts for designating the output format or examples of the music captioning model (302) according to an embodiment of the present invention may include instructions such as "Please explain the content of each item comprehensively regardless of the order of input items. Please explain concisely and clearly."

Meanwhile, according to an embodiment of the present invention, various system prompts may be utilized, not limited to the above-described examples of instructions. According to an embodiment of the present invention, when at least one of tag information, image caption information, music caption information, and text information is input, system prompts for specifying the output format and examples of the music captioning model (302) are utilized for each case, thereby improving the output result of music caption information according to the input data.

### Text Preprocessing Model (303) for Input Data

Referring to FIG. 3a, a process of preprocessing at least one of the input text information, image caption information, and music caption information may be performed. The text preprocessing process according to an embodiment of the present invention may be performed using a text preprocessing model (303). The text preprocessing process according to an embodiment of the present invention may be a process of processing information (or data) to improve the output result of the artificial intelligence model before processing at least one of the input text information, image caption information, and music caption information as input to the artificial intelligence model in a subsequent step. The text preprocessing model (303) according to an embodiment of the present invention may be a natural language processing-based artificial intelligence model.

The preprocessing process according to an embodiment of the present invention may be a process of processing at least one of the input text information, image caption information, and music caption information. Specifically, the output result can be improved by preprocessing input information so that the similarity with music files (e.g., component music files, etc.) increases by adjusting the amount of text included in at least one of the input text information, image caption information, and music caption information, or adjusting keywords. According to an embodiment of the present invention, music caption information can also be generated for music files (e.g., component music files) stored in the database. Music caption information for music files stored in the database may be generated based on the music captioning model (302) or may be pre-generated and stored as label data. Through the preprocessing process according to an embodiment of the present invention, by processing at least one of the input text information, image caption information, and music caption information to increase similarity with music caption information generated for music files stored in the database, the output result of the model (e.g., embedding extraction result, extraction result of generated music, etc.) can be improved.

The text preprocessing model (303) according to an embodiment of the present invention is a natural language processing-based artificial intelligence model, which can be implemented as a large language model, and a system prompt for instructing how the large language model operates can be utilized. System prompts according to an embodiment of the present invention may include system prompts for designating the purpose and role of the text preprocessing model (303), system prompts for designating information to be included in the output value of the text preprocessing model (303), system prompts for designating the output format or examples of the text preprocessing model (303), system prompts for informing examples of user input to the text preprocessing model (303), etc.

For example, a system prompt for designating the purpose and role of the text preprocessing model (303) according to an embodiment of the present invention may include instructions such as "You are a music expert. Based on text data entered by the user, tag data of music, image caption information, music caption information, etc., recommend and describe appropriate music."

System prompts for designating information to be included in the output value of the text preprocessing model (303) according to an embodiment of the present invention may include instructions such as "Provide detailed descriptions of recommended music. At least one of the following information should be included: 1) genre, mood, theme and style, 2) characteristics of main instruments or sounds, 3) rhythm pattern, 4) atmosphere or emotional tone of the song."

System prompts for designating the format or examples of the text preprocessing model (303) according to an embodiment of the present invention may include instructions such as "Do not use sensitive language," "Limit your answer to the maximum value of tokens. However, always answer in complete sentences."

System prompts for informing examples of user input to the text preprocessing model (303) according to an embodiment of the present invention may include examples such as "User input may include at least one of text, image caption, image tag, music caption, and music tag."

According to an embodiment of the present invention, when text "music good to listen to in a cafe" and information "music with poor sound quality and a lot of noise (Lo-Fi, Low Fidelity), Jazz, Beautiful" as music tags are input through a user prompt, text information such as "Music that goes well with the following description: [User prompt: music good to listen to in a cafe, Music tags: Lo-fi, Jazz, Beautiful, Music description: I recommend lo-fi jazz with calm melodies and a relaxed atmosphere. This genre creates a relaxed atmosphere perfect for a cafe. This style is characterized by soft and sweet instrumental performances including piano, saxophone, and light beats. Expect a relaxed rhythm with syncopated patterns that add to the relaxed atmosphere. An intimate and nostalgic atmosphere that evokes comfort and creativity, ideal for chatting over coffee or thinking alone.]" may be processed or generated through the text preprocessing model (303).

Such processed or generated text data may be processed as input to the text embedding extraction model (311) and/or music text embedding extraction model (312) according to an embodiment of the present invention to extract embeddings, and based on the extracted embeddings, subsequent steps such as searching component music files may be performed based on similarity judgment with embeddings related to component music files pre-stored in the database. In the present invention, the similarity between pieces of information can be calculated based on extracting embeddings for each piece of information and similarity between the extracted embeddings, and detailed methods will be discussed later.

### Embedding Extraction for Input Data

Music data and information recorded in file form according to an embodiment of the present invention can be calculated and stored as embeddings by an artificial intelligence-based embedding extraction model. Embeddings can be expressed in the form of vectors representing features of data. Each embedding can express features of music or sentences in vector form based on music files, caption information, text information, etc. According to an embodiment of the present invention, embeddings can be calculated and recorded for music files, especially component music files, using deep learning models. Embeddings based on component music files can be recorded in the local server (200b) and the cloud server (200a). In terms of service, it may be preferable to record them in the cloud server (200a), but this is not limited thereto. For example, embeddings based on component music files may be stored in at least one of the user terminal (100a), local terminal (100b), or local server (200b), and the service according to an embodiment of the present invention may be provided.

According to an embodiment of the present invention, an embedding process may be performed to express input text information (e.g., text information input as a prompt, image caption information, music caption information, etc.) in a numerical format that an artificial intelligence model can understand. According to an embodiment of the present invention, as shown in FIG. 3a, a process of extracting embeddings for input data through a text embedding extraction model (311), music text embedding extraction model (312), music feature embedding extraction model (313), etc. may be performed.

According to an embodiment of the present invention, as shown in FIG. 3a, a process of extracting embeddings for input data (e.g., component music file) through various embedding models such as chord progression embedding extraction model (322), frequency band embedding extraction model (323), etc. may be performed. According to the present invention, one or more features of music can be analyzed and expressed based on one or more embeddings extracted using an embedding model. These embeddings are for numerically expressing one or more features of music as vectors through an artificial intelligence model, and play a key role in the process of remixing, editing, and/or generating music according to embodiments of the present invention. According to one embodiment, various services such as finding specific music or classifying similar music can be performed by judging the similarity between music and music or music and sentences based on these embeddings. The method of judging mutual similarity between embeddings will be described later with reference to the similarity calculation model.

### Text Embedding

According to an embodiment of the present invention, the text embedding extraction model (311) may perform embedding on input text information (e.g., text information input as a prompt, image caption information, music caption information, etc.). The text embedding extraction model (311) can generate embeddings that match the input text information. According to an embodiment of the present invention, when a user inputs text such as "light rhythm and calm piano," the input text is embedded, and component music files can be searched based on the input text data through similarity judgment of embeddings. According to an embodiment of the present invention, when a user inputs information such as images, videos, music, or audio that can evoke imagery of "a tranquil forest with drizzling rain," caption information for the input data is generated through a captioning model, the caption information is embedded, and component music files having embeddings similar to the input information can be searched through the embedding.

According to an embodiment of the present invention, at least one of the input text information, tag information of music, image caption information, and music caption information may be preprocessed based on a natural language processing-based artificial intelligence model, then input to the text embedding extraction model (311) and output as text embeddings. Alternatively, according to an embodiment of the present invention, at least one of the input text information, tag information of music, image caption information, and music caption information may not be preprocessed based on a natural language processing-based artificial intelligence model, but may be processed as input to the text embedding extraction model (311). According to an embodiment of the present invention, at least one of the input text information, tag information of music, image caption information, and music caption information may be integrated through the text preprocessing model (303), and the text embedding extraction model (311) may extract text embeddings corresponding to the integrated text information based on the integrated text information. Alternatively, even if not preprocessed, at least one of the input text information, tag information of music, image caption information, and music caption information may be integrated, and the text embedding extraction model (311) may extract text embeddings corresponding to the integrated text information. The text embedding extraction model according to an embodiment of the present invention may utilize a text embedding API known to those skilled in the art of the present invention.

### Music Text Embedding

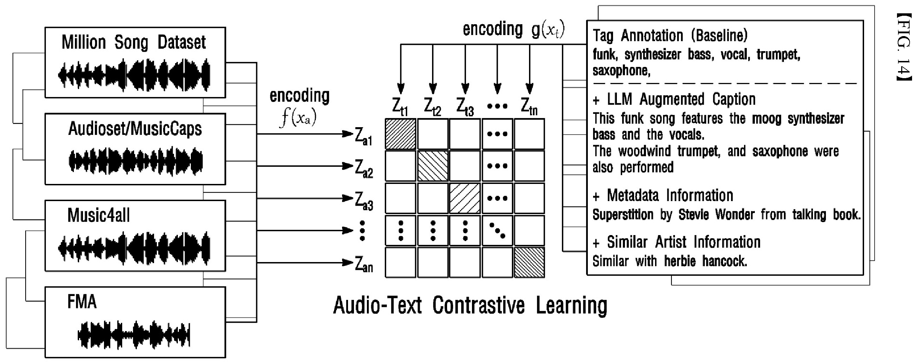

FIG. 14 is a diagram for explaining a music text embedding extraction model according to an embodiment of the present invention. According to an embodiment of the present invention, a model can be designed so that music (e.g., component music file, etc.) and text information can be learned in the same embedding space. Specifically, music text embedding is a method of representing music and text in the same embedding space. Music information is embedded through an artificial intelligence model, and this can be mapped with text representation to learn the relationship between music and text to extract embeddings. Music text embeddings extracted through the music text embedding model can reflect the correlation between musical features and natural language descriptions.

Because music text embeddings reflect this correlation, the search and matching effect between music and text can be better. For example, when a user describes music with a specific mood in natural language, music blocks with similar characteristics can be searched through the corresponding embedding. In this way, specific singer styles, specific instrument information, etc. can be learned more effectively. For example, when text information or tag information input includes information about a specific instrument, and the input music also includes performance by the instrument, the music text embedding model according to an embodiment of the present invention can learn information about the instrument more effectively by extracting music text embeddings based on the input music information and text information.

According to an embodiment of the present invention, at least one of the input text information, tag information of music, image caption information, and music caption information may be preprocessed based on a natural language processing-based artificial intelligence model, then input to the music text embedding extraction model (312) and output as music text embeddings. Alternatively, according to an embodiment of the present invention, at least one of the input text information, tag information of music, image caption information, and music caption information may not be preprocessed based on a natural language processing-based artificial intelligence model, but may be processed as input to the music text embedding extraction model (312).

According to an embodiment of the present invention, at least one of the input text information, tag information of music, image caption information, and music caption information may be integrated through the text preprocessing model (303), and the music text embedding extraction model (312) may extract music text embeddings corresponding to the integrated text information based on the integrated text information. Alternatively, even if not preprocessed, at least one of the input text information, tag information of music, image caption information, and music caption information may be integrated, and the music text embedding extraction model (312) may extract music text embeddings corresponding to the integrated text information.

### Music Feature Embedding

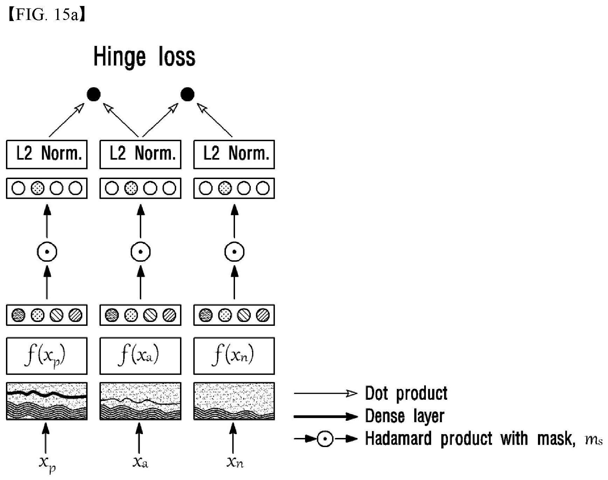

FIGS. 15a to 15c are diagrams for explaining music feature embedding extraction models according to embodiments of the present invention. Music feature embedding according to an embodiment of the present invention is an embedding that expresses overall features of music as vectors. Music feature embedding according to an embodiment of the present invention may be an embedding output by a model trained to output vectors based on features such as genre, mood, tempo, instrument configuration, etc. included in music, based on features included in the music.

By music feature embedding, overall characteristics of music can be learned using a deep learning model, mapped to a vector space, and similarity between similar music can be calculated. Music feature embedding can be utilized when a user searches for music of a specific style or mood. For example, when a user selects specific music, music blocks with similar musical features such as genre, mood, tempo, instrument configuration, timbre, rhythm, etc. can be found based on the embedding of the music and used for remixing.

The music feature embedding extraction model according to an embodiment of the present invention may be a model trained to map various features of sound sources to a multidimensional embedding space. The music feature embedding extraction model converts features of input sound sources into mel-spectrogram form and represents them as independent axes such as genre axis and mood axis in multidimensional space, enabling search and analysis tasks based on these axes.

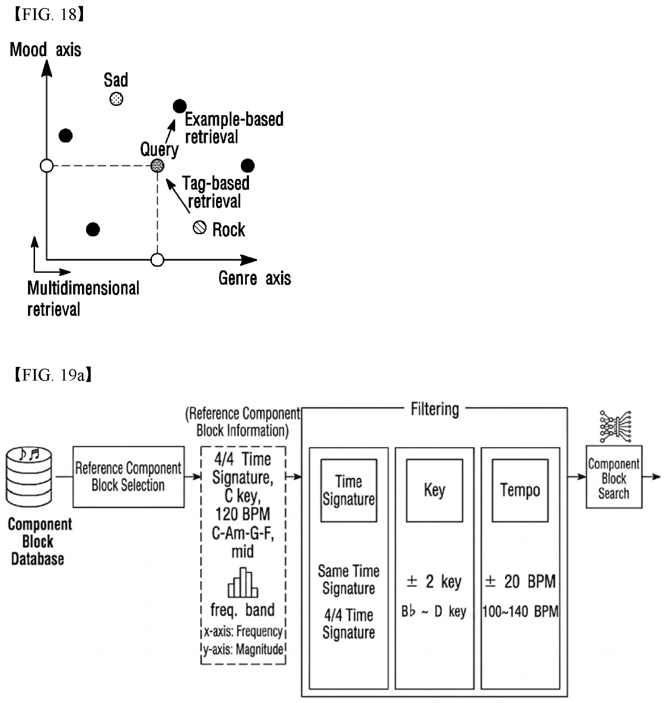

FIG. 18 is a diagram for explaining a similarity judgment method based on a music feature embedding space according to an embodiment of the present invention.

According to an embodiment of the present invention, the embedding space of the music feature embedding extraction model can support multidimensional retrieval. In addition, in the embedding space of the music feature embedding extraction model, the similarity of a specific sound source can be evaluated or a sound source conforming to a specific attribute can be searched through example-based retrieval and tag-based retrieval.

Multidimensional retrieval according to an embodiment of the present invention may be a method of selecting sound sources suitable for multiple attributes by simultaneously considering multiple axes (e.g., mood axis, genre axis, etc.) of the embedding space. The present invention provides efficient and accurate search results in a multidimensionally analyzed embedding space by utilizing such cosine similarity, and enables effective exploration of sound sources based on specific attributes according to user needs.

Referring to FIG. 18, embedding-based similarity search according to an embodiment of the present invention operates based on cosine similarity as a method of evaluating and searching similarity of sound sources using vectors generated in the embedding space.

According to an embodiment of the present invention, an input query vector calculates cosine similarity with other sound source vectors in a multidimensional embedding space, and based on this similarity value, search methods such as example-based retrieval, tag-based retrieval, and multidimensional retrieval can be executed. For example, when searching for a sound source including the mood tag "Sad" and the genre tag "Rock," data corresponding to each axis is mapped to independent separated representation spaces, enabling various methods to effectively search for sound sources most suitable for the query input by the user.

Example-based retrieval according to an embodiment of the present invention may be a method of selecting a vector with the highest similarity to an input query vector and providing search results based on overall similarity.

Tag-based retrieval according to an embodiment of the present invention may be a method of comparing cosine similarity with a reference vector corresponding to a specific tag (e.g., "Rock") input by a user and searching for sound sources related to the tag.

The music feature embedding extraction model according to an embodiment of the present invention can independently process various musical attributes by converting features of sound sources into separated multidimensional embeddings, thereby providing high accuracy in search and classification tasks focusing on specific attributes. In addition, separated representation spaces can be flexibly used in various search scenarios, and provide the advantage of evaluating data similarity by focusing on specific musical attributes.

FIG. 15a is a diagram for explaining a triplet-based music feature embedding extraction model according to an embodiment of the present invention. The triplet-based music feature embedding extraction model is a model that uses triplet learning to represent features of music data in a multidimensional embedding space. This model operates based on three data relationships: Anchor, Positive, and Negative samples, and can optimize relative positions between data in the embedding space using Hinge Loss. Specifically, it can be trained to minimize the distance between the anchor and positive samples as much as possible and increase the distance between the anchor and negative samples. Input data is provided to the model by converting digital signals of sound sources into mel-spectrogram form, and can be converted into low-dimensional vectors through an embedding function f(x). The converted vector represents a position in the embedding space, and the model learns and represents musical features (e.g., genre, mood, etc.) of each sample. The loss function is defined based on hinge loss, and is mathematically expressed as [Equation 1] below:

[Equation 1] $L \left(t\right) = max \left\{0,D\left(f\left({x}_{a}\right),f\left({x}_{n}\right)\right)-D\left(f\left({x}_{a}\right),f\left({x}_{p}\right)\right)+Δ\right\}$

In Equation (1), D(f(xa),f(xn)) and D(f(xa),f(xp)) represent the distance (mainly cosine distance) between two vectors, respectively, and Δ is a margin value. This function can be optimized so that the distance between the anchor and positive samples is smaller than the distance between the anchor and negative samples by a certain margin value or more.

The triplet-based music feature extraction model according to an embodiment of the present invention can apply a masking function to achieve disentangled representation. The masking function is designed so that only specific dimensions are activated for each musical attribute (e.g., genre, mood, etc.), and through this, independence between attributes can be maintained in multidimensional space. During the learning process, each triplet sample operates only in a specific subspace of the corresponding attribute according to the activated masking function, and the model learns attribute-separated embeddings.

Therefore, the triplet-based music feature extraction model according to an embodiment of the present invention independently learns various attributes of music data and generates an embedding space that can evaluate or search for similarity based on these attributes. This model can provide a structure that can flexibly perform search tasks according to specific musical features, and may be a model optimized for multidimensional music information search and classification tasks.

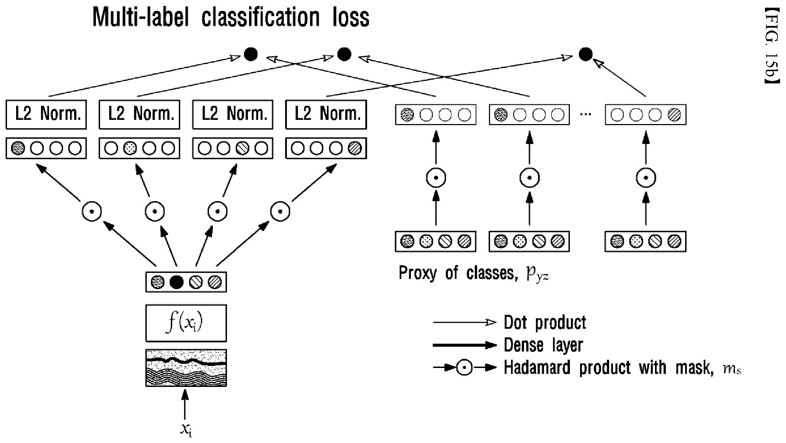

FIG. 15b is a diagram for explaining a proxy-based music feature embedding extraction model according to an embodiment of the present invention. The proxy-based music feature embedding extraction model is a model that uses proxy-based learning to represent features of music data in a multidimensional embedding space. This model performs learning based on similarity between input data and proxy vectors by generating proxy vectors corresponding to each class (e.g., genre, mood, etc.). Proxies act as center points for classes, and calculations are performed based on proxies instead of directly comparing with data samples, greatly improving learning efficiency. Input data is provided to the model by converting digital signals of sound sources into mel-spectrograms, and mapped to high-dimensional vectors through an embedding function f(xi). This vector represents the position of a sample in the multidimensional embedding space, and the loss function can be optimized by calculating cosine similarity with proxy vectors of each class.

The proxy-based music feature embedding extraction model according to an embodiment of the present invention can use binary cross-entropy loss to process multi-label data. The prediction probability for each class is calculated by passing the cosine similarity with the proxy vector of each class through a sigmoid activation function, and the loss function can be expressed mathematically as [Equation 2] below.
$L \left({x}_{i}\right) = {\sum }_{z} \left[-{y}_{z}log\left(\hat{{y}_{z}}\right)-\left(1-{y}_{z}\right)log\left(1-\hat{{y}_{z}}\right)\right]$

In [Equation 2], y_{z} is the actual label, and y_{z hat} is the prediction probability. Through this, the model learns how close the input vector is to each proxy vector, and can be optimized to reduce the distance between the proxy center point of each class and the sample.

Meanwhile, the proxy-based music feature embedding extraction model according to an embodiment of the present invention can use a masking function to achieve disentangled representation. The masking function determines subspaces activated according to specific attributes (e.g., genre, mood, etc.), and masking processing is applied in similarity calculation between proxy vectors and input vectors. Due to this, independence between each attribute is maintained in multidimensional space, and embeddings optimized for each attribute are generated.

Therefore, the proxy-based music feature embedding extraction model according to an embodiment of the present invention increases learning efficiency by utilizing proxy vectors, ensures independence between attributes in multidimensional embedding space, and can support search and classification tasks based on specific attributes of music data. The proxy-based music feature embedding extraction model according to an embodiment of the present invention can have a structure that provides high accuracy while minimizing direct comparison between data.

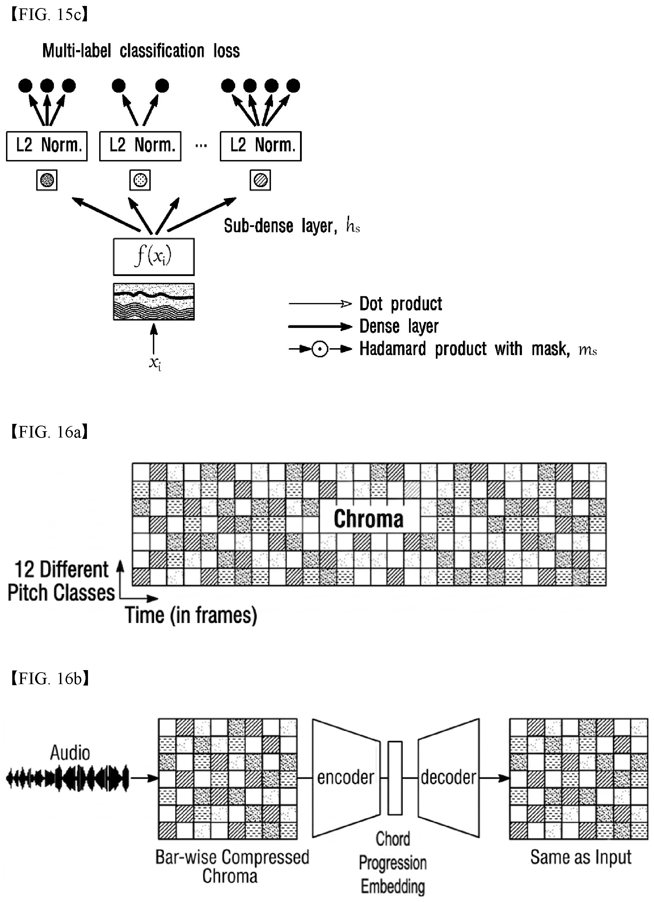

FIG. 15c is a diagram for explaining a classification-based music feature embedding extraction model according to an embodiment of the present invention. The classification-based music feature embedding extraction model according to an embodiment of the present invention is a model that uses classification-based learning to represent features of music data in a multidimensional embedding space. This model processes multi-label data and focuses on learning an embedding space where each class can be linearly separated. In addition, a masking function and sub-dense layers are utilized to configure independent subspaces for each attribute to achieve disentangled representation. Input data is converted into mel-spectrograms from digital signals of sound sources and input to the model, and converted into vector representations through an embedding function f(xi). This vector represents the position of a sample in the multidimensional embedding space, and similarity can be calculated through inner products with each class centroid.

Meanwhile, for separated representation, the classification-based music feature embedding extraction model according to an embodiment of the present invention is designed to operate in specific subspaces corresponding to each attribute (e.g., genre, mood, etc.). For this purpose, a masking function can be applied, which activates only dimensions corresponding to each attribute. In the activated subspace, sub-dense layers are added to enable independent learning for each attribute. Sub-dense layers can optimize embeddings for each attribute by calculating inner products between input vectors and class centroids in the subspace.

Meanwhile, in the classification-based music feature embedding extraction model according to an embodiment of the present invention, the loss function uses binary cross-entropy loss to process multi-label data, and the loss function is as described above through [Equation 2] in relation to the proxy-based music feature embedding extraction model. However, the structure of the loss function is the same in both models, but the proxy-based model uses proxy vectors, and the classification-based model uses class centroids, so the input vectors and comparison objects are different.

### Chord Progression Embedding

FIGS. 16a and 16b are diagrams for explaining a chord progression embedding extraction model according to an embodiment of the present invention. According to an embodiment of the present invention, chord progression patterns of music can be extracted and embedded. Chord progression refers to harmonic progression of a song, and is used to find blocks with similar chord progressions when remixing, editing, and/or generating music.

Chord progression embedding according to an embodiment of the present invention is an embedding that numerically expresses chord progression of music as a vector. A deep learning model is used to learn chord progression patterns of music, and map them to a vector space to enable finding music with similar chord progressions. This embedding can be utilized when a user selects chord progression of music to be used for remixing. For example, it can be utilized to search for music with a specific chord progression or find blocks suitable for remixing.

Referring to FIG. 16a, chord progression embedding according to an embodiment of the present invention may include a process of extracting and vectorizing chord progression patterns of music. FIG. 16a is a diagram visually representing such chord progression. Referring to FIG. 16a, chroma features can be represented as two-dimensional data consisting of a time axis and 12 pitch classes. Chroma features are mainly used to represent harmonic characteristics of music, and according to chroma features, energy distribution divided into 12 pitch classes (e.g., C, C#, D, etc.) can be visualized in each time frame. In FIG. 16a, the vertical axis represents 12 different pitch classes, and the horizontal axis represents time frames. The color intensity of each cell represents the relative intensity of a specific pitch class in the corresponding time frame, which is used to capture features of chord progression.

The chord progression embedding extraction model according to an embodiment of the present invention uses chroma features as input to learn chord progression patterns of music and maps them to a vector space to effectively compare or search for music with similar chord progressions.

Referring to FIG. 16b, the chord progression embedding extraction model according to an embodiment of the present invention may include an autoencoder for embedding chord progression of music. FIG. 16b is a diagram visually representing a process of generating chord progression embeddings from input data and restoring them again. As shown in FIG. 16b, audio signals are first converted into chroma features. Chroma is used to extract harmonic characteristics of music and is input in a form abbreviated in measure units. Chroma data according to an embodiment of the present invention is used as input data and transmitted to an autoencoder model.

The autoencoder according to an embodiment of the present invention consists of an encoder and a decoder. As shown in FIG. 16b, the encoder compresses input chroma data into a low-dimensional embedding space, and in this process, generates chord progression embeddings, which are vectors that efficiently represent chord progression patterns of music. This embedding represents the harmonic structure of a song in a compressed form. In addition, as shown in FIG. 16b, the decoder receives chord progression embeddings generated by the encoder and restores them to original chroma data. The restored data has the same form as the input data, which indicates that the model has learned important features (chord progression) of the input without loss.

Based on vectorized chord progression embeddings according to an embodiment of the present invention described with reference to FIGS. 16a and 16b, songs with similar chord progressions can be searched or recommended using generated chord progression embeddings. In addition, music component blocks with similar chord progressions can be identified and utilized for remixing or editing. In addition, new music can be generated or existing songs can be expanded while maintaining harmony based on chord progression embeddings.

### Frequency Band Embedding

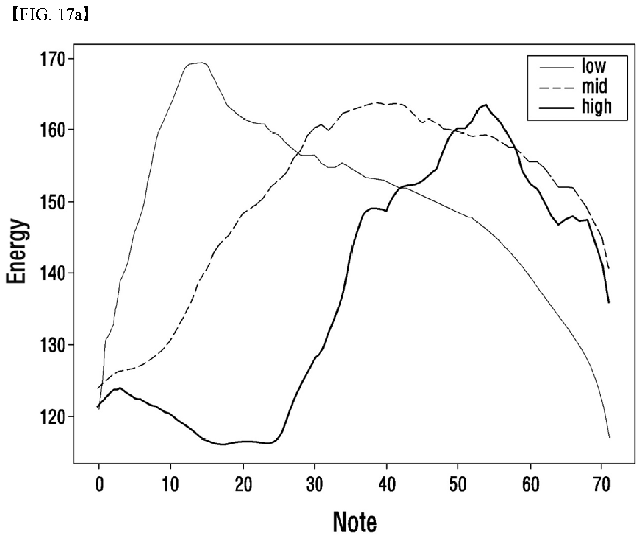

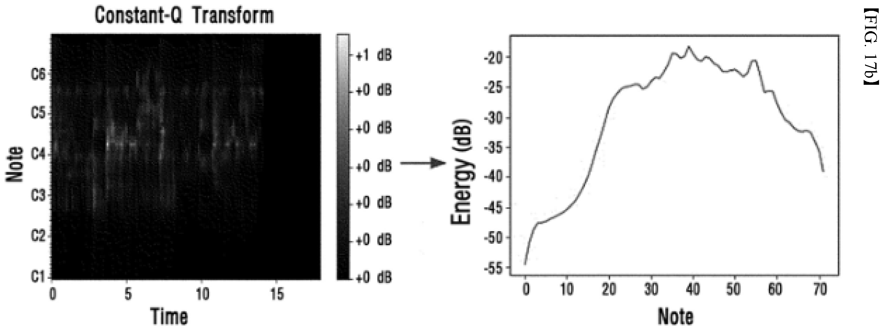

FIGS. 17a and 17b are diagrams for explaining a frequency band embedding extraction model according to an embodiment of the present invention. Frequency band embedding according to an embodiment of the present invention is an embedding that numerically quantifies features of specific ranges by analyzing frequency distribution of music. It can be analyzed and embedded by frequency band so that instrument elements (e.g., component tracks, instrument tracks) constituting music can be harmoniously arranged without overlapping each other. Frequency band embeddings can be used to harmonize instrument elements during remixing or editing so that their ranges do not overlap with each other.

For example, frequency band embeddings can be utilized to search for appropriate instrument elements or adjust corresponding ranges so that instruments in the mid-range and high-range do not collide in each other's frequency bands. In addition, for example, frequency band embeddings can be utilized to search for appropriate instrument elements or adjust corresponding ranges so that low-range instruments such as bass and drums do not collide in the same frequency band. In addition, for example, instruments in the mid-range and high-range can be arranged to be harmonious based on embeddings so that they do not invade each other's frequency areas. This method minimizes acoustic collision between instrument elements (e.g., component tracks, instrument tracks) in music editing and can ensure optimal sound quality and harmony.

FIG. 17a is a graph visually representing frequency distribution of music based on frequency band embeddings. The graph shown in FIG. 17a represents energy distribution in frequency bands of component blocks divided into low-range (low), mid-range (mid), and high-range (high) with respective curves. In the graph shown in FIG. 17a, the horizontal axis represents frequency bands in note units, and the vertical axis represents the magnitude of energy in each frequency band.

FIG. 17a is an example of frequency band embeddings showing energy magnitude by frequency band in specific music data. Frequency band embeddings obtain the magnitude in each frequency band over time, then average over the entire time to quantify and express as vectors, through which various ranges of music can be quantitatively analyzed. This analysis can harmoniously arrange components (e.g., instrument elements) of music in different frequency bands.

FIG. 17b is a diagram showing a process of frequency analysis and embedding of music data. FIG. 17b visually explains a process of analyzing input music data in the frequency domain through Constant-Q Transform (CQT), extracting energy by frequency band based on this, and generating embeddings.

The left part of FIG. 17b represents the Constant-Q Transform (CQT) result, with time as the horizontal axis and note as the vertical axis. Color represents the energy magnitude at the corresponding time and pitch, with brighter colors meaning stronger energy. This transformation is used to convert music data to the time-frequency domain and analyze energy distribution by pitch.

The right part of FIG. 17b shows a graph representing the result of calculating the sum of energies in a specific frequency band based on energy extracted through CQT analysis. In the graph shown on the right side of FIG. 17b, the horizontal axis represents frequency bands in note units, and the vertical axis represents energy values in decibel (dB) units. This graph visually shows energy changes according to frequency bands over time.

According to an embodiment of the present invention, music data can be quantified by frequency band through such analysis, and embeddings can be generated based on this. Generated embeddings quantitatively express frequency characteristics of music data, and can be utilized to perform tasks such as music similarity search, remixing, and editing. For example, instrument elements that excessively overlap in a specific frequency band can be identified and adjusted, or music with specific frequency characteristics can be searched.

### Storage of Embedding Data

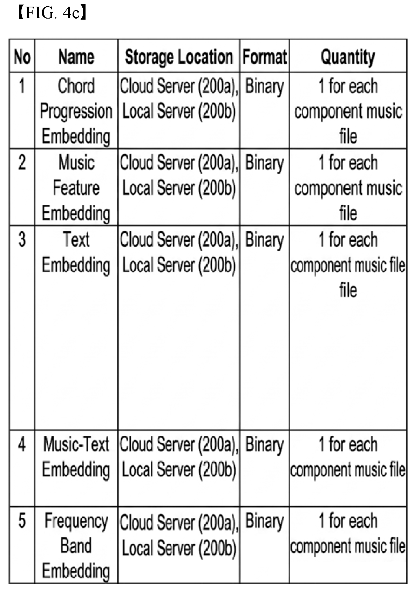

FIG. 4c is a table organizing one or more embeddings for providing services according to an embodiment of the present invention.

Referring to FIG. 4c, chord progression embeddings can be extracted based on component music files (31) in a local server (200b) based on a deep learning model according to an embodiment of the present invention. One chord progression embedding can be extracted per component music file (31), and can have a binary format. Chord progression embeddings according to an embodiment of the present invention can be stored in at least one of the memory (220a) of the cloud server (200a) and the memory (220b) of the local server (200b).

Referring to FIG. 4c, music feature embeddings can be extracted based on component music files (31) in a local server (200b) based on a deep learning model according to an embodiment of the present invention. One music feature embedding can be extracted per component music file (31), and can have a binary format. Music feature embeddings according to an embodiment of the present invention can be stored in at least one of the memory (220a) of the cloud server (200a) and the memory (220b) of the local server (200b).

Referring to FIG. 4c, text embeddings can be extracted based on text data such as text information input as a prompt, image caption information, music caption information, etc. in a local server (200b) based on a deep learning model according to an embodiment of the present invention. Meanwhile, according to an embodiment of the present invention, when music caption information (36) is generated based on component music file (31), and text embeddings are extracted based on the generated music caption information (36), one text embedding can be extracted per component music file (31), and can have a binary format. Text embeddings according to an embodiment of the present invention can be stored in at least one of the memory (220a) of the cloud server (200a) and the memory (220b) of the local server (200b).

Referring to FIG. 4c, music text embeddings can be extracted based on at least one of text data such as text information input as a prompt, image caption information, music caption information, etc. and music files (e.g., raw music file (30), component music file (31), etc.) in a local server (200b) based on a deep learning model according to an embodiment of the present invention. When music text embeddings are extracted based on component music file (31), one can be extracted per component music file (31), and can have a binary format. Music text embeddings according to an embodiment of the present invention can be stored in at least one of the memory (220a) of the cloud server (200a) and the memory (220b) of the local server (200b).

Referring to FIG. 4c, frequency band embeddings can be extracted based on component music files (31) in a local server (200b) based on a deep learning model according to an embodiment of the present invention. One frequency band embedding can be extracted per component music file (31), and can have a binary format. Frequency band embeddings according to an embodiment of the present invention can be stored in at least one of the memory (220a) of the cloud server (200a) and the memory (220b) of the local server (200b).

### Similarity Calculation Model Based on Extracted Embeddings

According to an embodiment of the present invention, at least one feature of each music file (e.g., component music file) in the embedding space can be represented by a unique embedding. According to an embodiment of the present invention, various services such as finding specific music or classifying similar music can be performed by judging similarity between music and music or music and sentences based on these embeddings.

According to an embodiment of the present invention, the similarity calculation model can judge mutual similarity for embeddings. That is, mutual similarity can be judged using cosine similarity between embeddings as shown in [Equation 3] below.

[Equation 3] $similarity = cos \left(θ\right) = \frac{A ⋅ B}{\left‖A\right‖ \left‖B\right‖} = \frac{{\sum }_{i = 1}^{n} {A}_{i} \times {B}_{i}}{\sqrt{{\sum }_{i = 1}^{n} {\left({A}_{i}\right)}^{2}} \times \sqrt{{\sum }_{i = 1}^{n} {\left({B}_{i}\right)}^{2}}}$

In [Equation 3] above, A and B are embeddings, respectively, and Ai and Bi represent each component of each embedding. For example, if one of the embeddings that is the basis for comparison is A and the other is B, when the value is high as a result of performing the operation using the above equation, it can be judged that A and B are relatively similar in proportion. Conversely, if the operation performance value is small, it can be judged that the dissimilarity between A and B is relatively strong. Therefore, mutual similarity of embeddings can be effectively judged based on this value.

According to an embodiment of the present invention, one or more embeddings can be used for searching component blocks. At this time, component blocks can be searched based on the sum of similarity scores between one or more embeddings. Depending on the type of input data and/or the search stage, the same or different weights may be applied to similarity scores between one or more embeddings. As a specific example, when text embeddings, music text embeddings, music feature embeddings, chord progression embeddings, and frequency embeddings are all used for searching component blocks, the sum of similarity scores can be calculated through [Equation 4] below. [Equation 4] 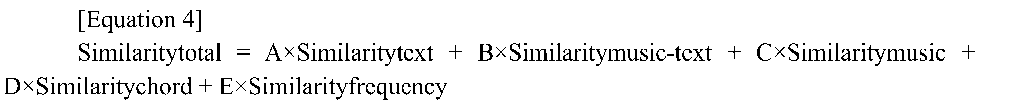 Similaritytotal = A×Similaritytext + B×Similaritymusic-text + C×Similaritymusic + D×Similaritychord + E×Similarityfrequency

In [Equation 4] above, A, B, C, D, and E represent weights, respectively, and Similaritytext, Similaritymusic-text, Similaritymusic, Similaritychord, and Similarityfrequency represent similarity based on text embedding, similarity based on music text embedding, similarity based on music feature embedding, similarity based on chord progression embedding, and similarity based on frequency band embedding, respectively, and Similaritytotal represents the sum of one or more similarities to which weights are applied.

Meanwhile, according to an embodiment of the present invention, as described with reference to Equation (4) above, weights can be applied to at least one of similarity based on text embedding, similarity based on music text embedding, similarity based on music feature embedding, similarity based on chord progression embedding, and similarity based on frequency band embedding, and the sum of one or more similarities to which weights are applied can be calculated. Based on the summed similarity score, selection and search of component blocks, editing, remixing, and generation of music according to embodiments of the present invention can be performed.

### Music Remixing, Editing, or Generation Process Based on Component Blocks

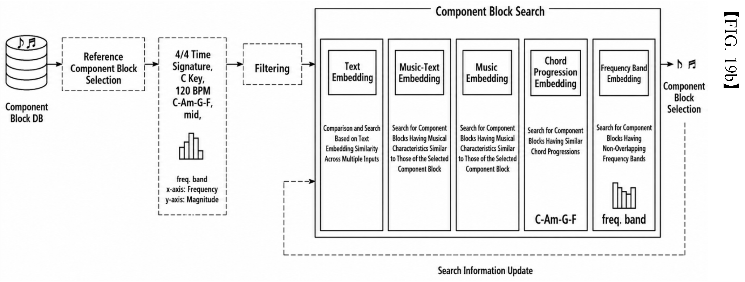

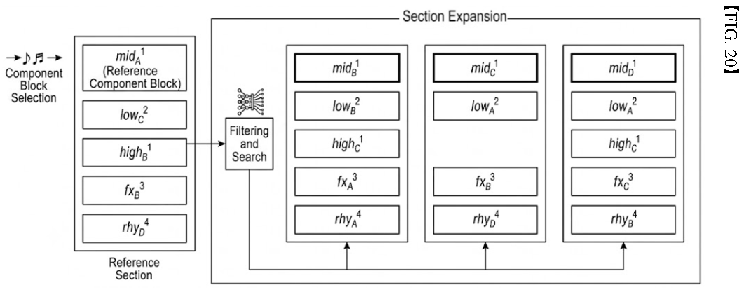

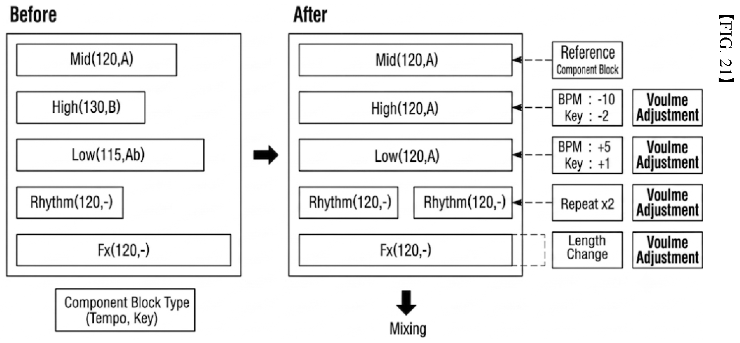

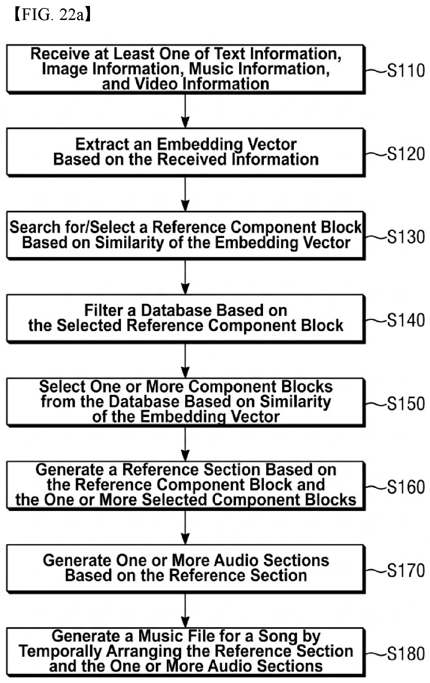

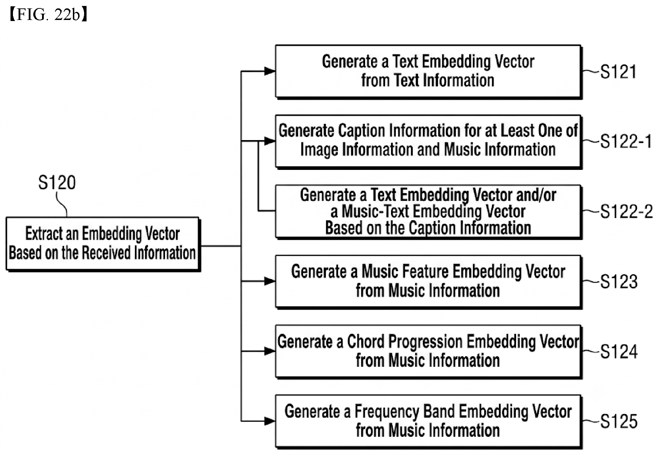

FIG. 3a is a flowchart showing artificial intelligence models for providing services according to an embodiment of the present invention and an overall method for providing services according to an embodiment of the present invention. FIG. 19a is a flowchart for explaining a component block filtering process according to an embodiment of the present invention. FIG. 19b is a flowchart for explaining a component block search process according to an embodiment of the present invention. FIG. 20 is a flowchart for explaining a section expansion process according to an embodiment of the present invention. FIG. 21 is a flowchart for explaining a component block editing process according to an embodiment of the present invention. FIGS. 22a and 22b are flowcharts for explaining a method of generating music based on multimodal according to an embodiment of the present invention.

Referring to FIGS. 22a and 22b, a method of generating music based on multimodal according to an embodiment of the present invention is disclosed. As shown in FIG. 22a, the multimodal-based music generation method according to an embodiment of the present invention may include receiving at least one of text information, image information, music information, and video information (S110).

Thereafter, the multimodal-based automatic music generation method according to the disclosed invention may include extracting embeddings based on the received information (S120).

More specifically, the step (S120) of extracting embeddings may include generating text embeddings from text information, generating caption information for at least one of image information and music information and generating text embeddings and/or music text embeddings based on the caption information, generating music feature embeddings from music information, generating chord progression embeddings from music information, and generating frequency band embeddings from music information.

Thereafter, the multimodal-based automatic music generation method according to the disclosed invention may include searching and selecting reference component blocks based on similarity between embeddings of component blocks in the database based on the extracted embeddings (S130).

Thereafter, the multimodal-based automatic music generation method according to the disclosed invention may include filtering the database based on the selected reference component block (S140).

Thereafter, the multimodal-based automatic music generation method according to the disclosed invention may include selecting one or more component blocks from the database based on similarity between embeddings of component blocks included in the filtered database and extracted embeddings (S150).

Thereafter, the multimodal-based automatic music generation method according to the disclosed invention may include generating a reference section based on the reference component block and one or more component blocks selected from the database (S160).

Thereafter, the multimodal-based automatic music generation method according to the disclosed invention may include generating one or more audio sections based on the reference section (S170).

Thereafter, the multimodal-based automatic music generation method according to the disclosed invention may include generating a song-level music file by chronologically arranging the reference section and one or more audio sections (S180).

Therefore, the multimodal-based automatic music generation method and apparatus according to the disclosed invention have the advantage of generating various types of embeddings from input information including text information, image information, music information, and video information from a user, and generating song-level music by combining a plurality of component blocks from an audio database based on this.

Referring to FIG. 22b, the step (S120) of extracting embeddings based on received information according to an embodiment of the present invention may include generating text embeddings from text information (S121), generating caption information for at least one of image information and music information (S122-1), generating text embeddings and/or music text embeddings based on caption information (S122-2), generating music feature embeddings from music information (S123), generating chord progression embeddings from music information (S124), and generating frequency band embeddings from music information (S125).

Specifically, when one or more pieces of information such as tag information, image information, video information, music information, audio information, text information (e.g., natural language-based text, code-based text, etc.) are input through a user input unit (e.g., user interface, prompt, etc.), embeddings can be extracted or generated for at least one of the input information. Based on similarity judgment between embeddings extracted from component blocks included in the database and embeddings extracted from information input through a user input unit (e.g., user interface, prompt, etc.), one or more component blocks such as reference component blocks can be selected, and when one or more audio sections are generated based on the selected component blocks, a music file can be generated based on one or more audio sections.

In this way, music can be generated based on multimodal based on various information (e.g., tag information, image information, video information, music information, audio information, text information, etc.) input through a user input unit (e.g., user interface, prompt, etc.).

In addition, the multimodal-based automatic music generation method and apparatus according to the disclosed invention have the advantage of being able to generate more natural and complete music through a process of selecting a reference component block on the database based on embeddings and then searching and selecting component blocks based on the selected reference component block.

In addition, the multimodal-based automatic music generation method and apparatus according to the disclosed invention have the advantage of automatically generating complete song-level music reflecting the atmosphere desired by the user based on data such as text, images, videos, and music input by the user, and allowing the user to continuously generate and listen to music of similar styles by updating this to the database. Referring to FIG. 3a, the method according to an embodiment of the present invention may include a component block filtering and search step (S300), a component block selection step (S320), a section expansion step (S340), and a component block editing and mixing step (S360).

As shown in FIG. 19a, according to an embodiment of the present invention, the component block filtering and search step (S300) may include selecting a reference component block from one or more component blocks included in the database based on at least one of text data input through a user prompt, tag information input through a user prompt, image caption information, music information, and music caption information.

According to an embodiment of the present invention, a reference component block can be selected from the database based on comparison between at least one of embeddings based on at least one of text data input through a user prompt, tag information input through a user prompt, image caption information, music information, and music caption information, and at least one of embeddings (e.g., at least one of text embeddings, music text embeddings, music feature embeddings, chord progression embeddings, frequency band embeddings) extracted from component blocks in the database and music basic information (e.g., beat, tempo, key, instrument information, etc.).

Thereafter, filtering of the component block database can be performed based on music basic information (e.g., beat, tempo, key, instrument information, etc.) related to the selected reference component block. After filtering of the component block database is performed, component blocks can be searched and selected based on comparison between at least one of text embeddings, music text embeddings, music feature embeddings, chord progression embeddings, and frequency band embeddings based on component blocks included in the filtered database, and embeddings based on at least one of text data input through a user prompt, tag information input through a user prompt, image caption information, music information, and music caption information.

According to an embodiment of the present invention, after one or more component blocks are filtered, the filtered one or more component blocks can be searched. According to an embodiment of the present invention, based on each component block, music can be remixed or new music can be generated by changing temporal order or instrumental combinations. At this time, natural connections between blocks can be made considering interactions between instruments.

According to the present invention, according to the above-described hierarchical structure analysis model of music, precise music information necessary for music remix and generation can be obtained through a process of separating music files into component blocks using Neighborhood Attention and transformer-based DiNA and NA blocks and storing them as a database. Through this, blocks can be combined or new blocks can be generated based on various musical needs of users (e.g., data input through a user input unit).

Music is created in section units based on selected component blocks, and remixing, editing, and/or generation of music can be achieved through subsequent section expansion. Hereinafter, component block filtering and search will be described with reference to the drawings.

### Selection of Reference Component Block

According to an embodiment of the present invention, a reference component block can be selected from the database based on comparison between at least one of embeddings based on at least one of text data input through a user prompt, tag information input through a user prompt, image caption information, music information, and music caption information, and at least one of embeddings (e.g., at least one of text embeddings, music text embeddings, music feature embeddings, chord progression embeddings, frequency band embeddings) extracted from component blocks in the database and music basic information (e.g., beat, tempo, key, instrument information, etc.).

As shown in FIG. 5b, reference component blocks included in the database can have at least one of text embeddings, music text embeddings, music feature embeddings, chord progression embeddings, frequency band embeddings, and music basic information (e.g., beat, tempo, key, instrument information, etc.) as metadata, and in FIG. 19a, such metadata is shown as 'reference component block information'.

### Component Block Filtering

FIG. 19a is a flowchart for explaining a component block filtering process according to an embodiment of the present invention. Based on music basic information (e.g., beat, tempo, key, instrument information, etc.) of the selected reference component block, one or more component blocks included in the database can be filtered.

According to an embodiment of the present invention, by a filtering algorithm, component blocks having beat information identical to the beat information of the reference component block can be filtered, component blocks having key information with a difference of within 2 Keys from the key information of the reference component block can be filtered, and component blocks having tempo information with a difference of within 20 BPM from the tempo information of the reference component block can be filtered to configure a database. The above-described reference component block information and specific numerical values are merely simple examples for explanation, and the present invention is not limited thereto. Based on this filtered database, a component block search process can be performed.

### Component Block Search

FIG. 19b is a flowchart for explaining a component block search process according to an embodiment of the present invention. Search and selection of one or more component blocks from the filtered database can be performed based on comparison between at least one of the above-described one or more embeddings and music basic information, and data input through a user input unit (e.g., user interface, prompt, etc.). As shown in FIG. 5b, each component block included in the database can have at least one of text embeddings, music text embeddings, music feature embeddings, chord progression embeddings, frequency band embeddings, and music basic information (e.g., beat, tempo, key, instrument information, etc.) as metadata.

Referring to FIG. 19b, an embedding extraction process can be performed for at least one of text information input through a user prompt, tag information input through a user prompt, image caption information, and music caption information. According to an embodiment of the present invention, at least one of text embeddings, music text embeddings, music feature embeddings, chord progression embeddings, and frequency band embeddings based on user input data can be extracted. By a component block search model based on a similarity calculation model, search and selection of component blocks can be performed based on similarity comparison between one or more embeddings based on user input data and embeddings of one or more component blocks included in the filtered database.

For a specific example, according to an embodiment of the present invention, search and selection of component blocks can be performed based on similarity comparison between text embeddings of user input data and text embeddings of component blocks included in the filtered database. For example, similarity between text embeddings can be judged, and scores can be assigned to each component block in order of high similarity.

According to an embodiment of the present invention, search and selection of component blocks can be performed based on similarity comparison between music text embeddings of user input data and music text embeddings of component blocks included in the filtered database. For example, similarity between music text embeddings can be judged, and scores can be assigned to each component block in order of high similarity.

According to an embodiment of the present invention, search and selection of component blocks can be performed based on similarity comparison between music embeddings of user input data and music embeddings of component blocks included in the filtered database. For example, similarity between music embeddings can be judged, and scores can be assigned to each component block in order of high similarity.

According to an embodiment of the present invention, search and selection of component blocks can be performed based on similarity comparison between chord progression embeddings of user input data and chord progression embeddings of component blocks included in the filtered database. For example, similarity between chord progression embeddings can be judged, and scores can be assigned to each component block in order of high similarity.

According to an embodiment of the present invention, search and selection of component blocks can be performed based on similarity comparison between frequency band embeddings of user input data and frequency band embeddings of component blocks included in the filtered database. For example, similarity between frequency band embeddings can be judged, and scores can be assigned to each component block in order of high similarity.

That is, according to an embodiment of the present invention, as discussed above with reference to Equation (4) above, weights can be applied to at least one of similarity based on text embeddings, similarity based on music text embeddings, similarity based on music feature embeddings, similarity based on chord progression embeddings, and similarity based on frequency band embeddings, and the sum of one or more similarities to which weights are applied can be calculated. Based on the summed similarity score, selection and search of component blocks, editing, remixing, and generation of music according to embodiments of the present invention can be performed.

Meanwhile, according to an embodiment of the present invention, as shown in FIG. 19b, search information can be updated based on the selected component block. That is, based on at least one of text embeddings, music text embeddings, music feature embeddings, chord progression embeddings, and frequency band embeddings related to the selected component block, other component blocks on the filtered database can be searched, and based on similarity judgment for at least one of text embeddings, music text embeddings, music feature embeddings, chord progression embeddings, and frequency band embeddings between the selected component block and other component blocks included in the filtered database, search and selection of additional component blocks can be performed.

### Reference Section Generation and Section Expansion

FIG. 20 is a flowchart for explaining a section expansion process according to an embodiment of the present invention. As shown in FIG. 20, based on the reference component block, component blocks of other instrument elements included in the database can be searched and selected to generate a reference section. Specifically, by a component block search model according to an embodiment of the present invention, one or more component blocks can be searched and selected on the database based on similarity judgment with one or more embeddings of the reference component block. According to an embodiment of the present invention, for one or more component blocks that are searched and selected, a process of providing feedback based on the reference component block can be performed, and as a result of feedback, component blocks for generating a reference section can be searched and selected. The music generation model according to an embodiment of the present invention can generate a reference section by editing and mixing the reference component block and one or more selected component blocks.

The reference section can include a plurality of component blocks whose frequency bands do not overlap with each other. For a specific example, a plurality of component blocks refer to data for a single item constituting a sound source. For example, types of component blocks may include rhythm component blocks, bass component blocks, low component blocks, mid component blocks, high component blocks, FX component blocks, and melody component blocks. For example, a reference section may be composed of rhythm component blocks, low component blocks, mid component blocks, high component blocks, FX component blocks, etc. Here, rhythm, bass, mid, high, FX, and melody may be terms referring to ranges, instrument elements, or types of instrument tracks (component tracks). According to an embodiment of the present invention, bass component blocks may be included in low component blocks. In addition, low may refer to low-range component blocks, mid may refer to mid-range component blocks, and high may refer to high-range component blocks.

According to an embodiment of the present invention, the music generation model can generate a reference section by performing editing such as adjusting positions of a plurality of component blocks, adjusting tempo, adjusting key, or adjusting length, and mixing a plurality of component blocks for which editing is completed.

Referring to FIG. 20, the reference section according to an embodiment of the present invention may include a reference component block corresponding to mid and a plurality of component blocks selected based on it.

Referring to FIG. 20, the music generation model according to an embodiment of the present invention can designate mid component blocks of other sections as reference component blocks of each audio section from the raw music file (30) including the reference component block of the reference section. At this time, the music generation model may arrange mid component blocks sequentially in each audio section in the order of progression of the raw music file (30), or may arrange mid component blocks in a free order considering song progression regardless of this. Mid component blocks arranged in this way can serve as reference component blocks of each audio section, and each audio section can be generated in the same way as the process of generating the reference section.

Specifically, the music generation model according to an embodiment of the present invention, after the reference component block of the audio section is determined, can select at least one of component blocks corresponding to other instrument elements except for component blocks identical to the reference component block (in this embodiment, mid component blocks) (e.g., rhythm component blocks, low component blocks, high component blocks, FX component blocks) from the database and include them in the corresponding audio section. That is, based on the reference component block selected and arranged from the raw music file (30), component blocks of other instrument elements included in the database can be searched, and the searched component blocks can be selected and included in the corresponding audio section to generate a new audio section. In this case, search and selection of component blocks can be performed based on similarity judgment between one or more embeddings of the reference component block and one or more embeddings of component blocks included in the database, as discussed above. In this way, audio sections can be generated based on the reference section, and when section expansion is achieved by chronologically arranging the generated audio sections with the reference section, music files can be remixed, edited, and/or generated as a result.

Meanwhile, according to an embodiment of the present invention, reference component blocks are not always composed of mid component blocks, and reference component blocks can be composed of other component blocks such as low component blocks or high component blocks.

In addition, at least one of the reference section and audio sections generated by the music generation module according to an embodiment of the present invention may be composed of rhythm component blocks, low component blocks, mid component blocks, high component blocks, and FX component blocks, but each section may not include at least one of rhythm component blocks, low component blocks, mid component blocks, high component blocks, and FX component blocks.

Meanwhile, the subscript of each component block shown in FIG. 20 is information indicating the name of the section, and the superscript is information indicating the raw music file including the corresponding component block. Referring to FIG. 20, each component block of each audio section is composed of component blocks extracted from the raw music file (30) including each component block of the reference section.

For example, as shown in FIG. 20, since the mid component block of the reference section is a component block extracted from the first raw music file, each mid component block included in one or more audio sections generated based on it can be selected from mid component blocks extracted from the first raw music file.

In addition, as shown in FIG. 20, since the low component block of the reference section is a component block extracted from the second raw music file, each low component block included in one or more audio sections generated based on it can be selected from low component blocks extracted from the second raw music file.

In addition, as shown in FIG. 20, since the high component block of the reference component music file is a component block extracted from the first raw music file, each high component block included in one or more audio sections generated based on it can be selected from high component blocks extracted from the first raw music file.

If there is no appropriate high component block among high component blocks extracted from the first raw music file based on embedding similarity calculation of the reference component block of the corresponding audio section, the corresponding audio section may be composed without high component blocks.

As described above, by generating audio sections based on component blocks (component music files) extracted from each raw music file (30), there is a technical effect of being able to generate more natural and complete music. In addition, since the music generation model according to an embodiment of the present invention generates audio sections in the above manner, reverberations can be arranged so that musical connections between a plurality of section audios can be made naturally.

### Component Block Editing and Remixing

FIG. 21 is a flowchart for explaining a component block editing and remixing process according to an embodiment of the present invention. As shown in FIG. 21, a process for editing and remixing one or more component blocks included in an audio section according to an embodiment of the present invention can be performed.

Referring to FIG. 21, an audio section according to an embodiment of the present invention is composed of various component blocks such as mid, high, low, rhythm, and FX selected, and each component block can have unique musical attributes (e.g., music basic information) such as tempo (BPM), key, and range. However, if the unique musical attributes included in one or more selected component blocks do not match each other, there is a concern that the music may feel awkward. Therefore, as shown in FIG. 21, a process for editing and remixing one or more component blocks included in an audio section may be necessary.

Referring to FIG. 21, various editing operations can be applied to component blocks, and each component block having musical attributes adjusted by editing operations can be newly arranged within an audio section. For example, the lengths of one or more component blocks included in an audio section can be adjusted to be the same. In addition, for example, the high component block has tempo (BPM) adjusted by -10 and key changed by -2, the rhythm component block has the number of repetitions doubled, etc., and by editing musical attributes of each component block, harmony can be achieved with each other. In addition, volumes of one or more component blocks can be individually adjusted to maintain harmonious volume balance. New audio sections can be generated based on one or more component blocks edited in this way, through which the overall expression of music can be improved and designed to be harmonious. There is an effect of increasing productivity of remixing work and providing new musical possibilities by efficiently adjusting and optimizing attributes of component blocks in the music generation and editing process according to an embodiment of the present invention.

Each method according to the present invention can be implemented as a computer program. The computer program can be stored in a recording medium to execute each method according to the present invention.

In addition, each method according to the present invention can be implemented in the form of program instructions that can be executed through various computer means and recorded in a computer-readable medium. The computer-readable recording medium may include program instructions, data files, data structures, etc. alone or in combination. Program instructions recorded on the medium may be specially designed and configured for the present invention or may be known and available to those skilled in computer software. Examples of computer-readable recording media include hard disks, floppy disks, and magnetic media such as magnetic tape, optical media such as CD-ROM and DVD, magneto-optical media such as floptical disks, and hardware devices specially configured to store and execute program instructions such as ROM, RAM, flash memory, etc. Examples of program instructions include not only machine language code such as that made by a compiler but also high-level language code that can be executed by a computer using an interpreter, etc. The above-described hardware device may be configured to operate as one or more software modules to perform operations of the present invention, and vice versa.

In addition, although embodiments have been mainly described above, these are merely examples and do not limit the present invention, and those skilled in the art to which the present invention pertains will be able to understand that various modifications and applications not exemplified above are possible without departing from the essential characteristics of the present embodiment. For example, each component specifically shown in the embodiment can be modified and implemented. And differences related to such modifications and applications should be construed as being included in the scope of the present invention defined in the appended claims.

## Claims

1. A method for providing music generated based on artificial intelligence, comprising:
receiving at least one of text information, tag information, image information, and music information input from a user terminal;
extracting one or more embeddings based on the received information through one or more embedding extraction models;
calculating similarity between the one or more embeddings based on the received information and one or more embeddings extracted from component blocks included in a database - the component blocks being extracted from raw music files - through a similarity calculation model;
selecting a first reference component block from the database based on the calculated similarity;
filtering the database based on the selected first reference component block;
selecting one or more component blocks from the filtered database; and
generating a reference section based on the first reference component and the selected one or more component blocks.

2. The method of claim 1, further comprising:
selecting a second reference component block having the same instrument element as the first reference component block from the raw music file;
selecting one or more additional component blocks from the filtered database based on the second reference component block;
generating an audio section based on the second reference component block and the one or more additional component blocks; and
generating a music file by chronologically arranging the reference section and the audio section.

3. The method of claim 1, wherein:
the one or more embeddings extracted based on the received information and the one or more embeddings extracted from component blocks included in the database each include at least one of text embeddings, music text embeddings, music feature embeddings, chord progression embeddings, and frequency band embeddings.

4. The method of claim 3, wherein:
the step of calculating similarity between the one or more embeddings extracted based on the received information and one or more embeddings extracted from component blocks included in the database through a similarity calculation model comprises:
calculating one or more similarity scores based on the text embeddings, the music text embeddings, the music feature embeddings, the chord progression embeddings, and the frequency band embeddings; and
reflecting weights according to the type of embeddings for the one or more similarity scores, and calculating the similarity by summing the one or more similarity scores reflecting the weights.

5. The method of any one of claims 1 to 4, wherein:
the step of filtering the database based on the selected first reference component block further comprises:
filtering the database based on music basic information related to the first reference component block.

6. A server for providing music generated based on artificial intelligence, comprising:
a communication module;
a memory storing a database; and
a processor,
wherein the processor:
receives at least one of text information, tag information, image information, and music information input from a user terminal through the communication module,
extracts one or more embeddings based on the received information through one or more embedding extraction models stored in the memory,
calculates similarity between the one or more embeddings based on the received information and one or more embeddings extracted from component blocks included in the database - the component blocks being extracted from raw music files - through a similarity calculation model stored in the memory,
selects a first reference component block from the database based on the calculated similarity,
filters the database based on the selected first reference component block,
selects one or more component blocks from the filtered database, and
generates a reference section based on the first reference component and the selected one or more component blocks.

7. The server of claim 6, wherein the processor:
selects a second reference component block having the same instrument element as the first reference component block from the raw music file,
selects one or more additional component blocks from the filtered database based on the second reference component block,
generates an audio section based on the second reference component block and the one or more additional component blocks, and
generates a music file by chronologically arranging the reference section and the audio section.

8. The server of claim 6, wherein:
the one or more embeddings extracted based on the received information and the one or more embeddings extracted from component blocks included in the database each include at least one of text embeddings, music text embeddings, music feature embeddings, chord progression embeddings, and frequency band embeddings.

9. The server of claim 8, wherein the processor:
calculates one or more similarity scores based on the text embeddings, the music text embeddings, the music feature embeddings, the chord progression embeddings, and the frequency band embeddings through the similarity calculation model stored in the memory, reflects weights according to the type of embeddings for the one or more similarity scores, and calculates the similarity by summing the one or more similarity scores reflecting the weights.

10. The server of any one of claims 6 to 9, wherein the processor:
filters the database based on music basic information related to the first reference component block.

11. A method for providing music generated based on artificial intelligence, comprising:
receiving text information, tag information, image information, and music information input from a user terminal;
generating image caption information for the image information through an image captioning model;
generating music caption information for the music information through a music captioning model;
performing preprocessing on the text information, the tag information, the image caption information, and the music caption information through a text preprocessing model; and
generating at least one of text embeddings and music text embeddings based on the preprocessed information through one or more embedding extraction models.

12. The method of claim 11, wherein:
the music captioning model is an artificial intelligence model obtained by transfer learning an artificial intelligence model pre-trained with a pseudo caption dataset generated based on an artificial intelligence model utilizing a system prompt including one or more tags and one or more instructions, based on a label dataset.

13. The method of claim 12, wherein:
the one or more instructions include at least one of:
an instruction for designating the purpose or role of the music captioning model; and
an instruction for indicating the output format of the pseudo caption.

14. The method of any one of claims 11 to 13, further comprising:
calculating similarity between at least one of the text embeddings and the music text embeddings based on the preprocessed information and at least one of the text embeddings and the music text embeddings extracted from component blocks included in the database through a similarity calculation model.

15. The method of claim 14, wherein:
the step of calculating similarity comprises:
calculating one or more similarity scores between at least one of the text embeddings and the music text embeddings based on the preprocessed information and at least one of the text embeddings and the music text embeddings extracted from component blocks included in the database;
reflecting weights according to the type of embeddings for the one or more similarity scores; and
calculating the similarity by summing the one or more similarity scores reflecting the weights.

16. A server for providing music generated based on artificial intelligence, comprising:
a communication module;
a memory storing a database; and
a processor,
wherein the processor:
receives text information, tag information, image information, and music information input from a user terminal through the communication module,
generates image caption information for the image information through an image captioning model stored in the memory,
generates music captioning information for the music information through a music captioning model stored in the memory,
performs preprocessing on the text information, the tag information, the image caption information, and the music caption information through a text preprocessing model stored in the memory, and
generates at least one of text embeddings and music text embeddings based on the preprocessed information through one or more embedding extraction models stored in the memory.

17. The server of claim 16, wherein:
the music captioning model is an artificial intelligence model obtained by transfer learning an artificial intelligence model pre-trained with a pseudo caption dataset generated based on an artificial intelligence model utilizing a system prompt including one or more tags and one or more instructions, based on a label dataset.

18. The server of claim 16, wherein:
the music captioning model is a natural language processing-based artificial intelligence model obtained by transfer learning a natural language processing-based artificial intelligence model pre-trained with a pseudo caption dataset generated based on a natural language processing-based artificial intelligence model utilizing a system prompt including one or more tags and one or more instructions, based on a label dataset.

19. The server of claim 18, wherein:
the one or more instructions include at least one of:
an instruction for designating the purpose or role of the music captioning model; and
an instruction for indicating the output format of the pseudo caption.

20. The server of any one of claims 16 to 19, wherein the processor:
calculates similarity between at least one of the text embeddings and the music text embeddings based on the preprocessed information and at least one of the text embeddings and the music text embeddings extracted from component blocks included in the database through a similarity calculation model stored in the memory.
